# EUROPÄISCHE PATENTSCHRIFT

(11) **EP 3 737 625 B1**
(45) Veröffentlichungstag und Bekanntmachung des Hinweises auf die Patenterteilung: **07.06.2023**
(21) Anmeldenummer: 19716355.3
(22) Anmeldetag: 03.04.2019
(51) Int. Cl.: B65G 45/12

(54) **FÖRDERBAND-ABSTREIFVORRICHTUNG UND VERSCHIEBEFÜHRUNG DAFÜR**
CONVEYOR BELT SCRAPING DEVICE AND DISPLACEMENT GUIDE THEREFOR
DISPOSITIF DE DÉCAPAGE DE BANDE TRANSPORTEUSE ET GUIDE COULISSANT ASSOCIÉ

(43) Veröffentlichungstag der Anmeldung: 18.11.2020
(73) Patentinhaber: Schulte Strathaus GmbH & Co. KG Fördertechnik Dichtungssysteme, 59457 Werl (DE)
(72) Erfinder: SUDHOFF, Sebastian, 59755 Arnsberg (DE)
(74) Vertreter: Von Rohr Patentanwälte Partnerschaft mbB
(86) Internationale Anmeldenummer: PCT/EP2019/058404
(87) Internationale Veröffentlichungsnummer: WO 2020/200441

(56) Entgegenhaltungen:
- EP-A1- 2 108 602
- GB-A- 1 578 582
- GB-A- 2 227 991
- US-A1- 2016 167 892

## Beschreibung

Die Erfindung betrifft eine Förderband-Abstreifvorrichtung für ein Förderband einer Förderbandanlage.

Förderbandanlagen verwenden ein sich bewegendes Förderband zum Transportieren von Schüttgut, wie Sand, Kies und Kohle, von einem Ort zu einem anderen Ort. Wenn das Schüttgut von dem Förderband am Ende an einer Umlenkwalze herabfällt, bleibt manchmal ein Rest des Schüttgutes an dem Förderband haften. Eine Förderband-Abstreifvorrichtung der in Rede stehenden Art dient dazu, das am Förderband anhaftende restliche Schüttgut abzustreifen.

Normalerweise befindet sich eine erste Förderband-Abstreifvorrichtung unmittelbar an der Umlenkwalze des Förderbandes als sog. Primärabstreifer. Am Untertrum des Förderbandes befindet sich in Laufrichtung des Förderbandes hinter dem Primärabstreifer meist noch ein Sekundärabstreifer.

Die meist mehreren nebeneinander angeordneten Abstreifsegmente einer Förderband-Abstreifvorrichtung sind auswechselbar an einer meist drehbar und häufig auch zusätzlich linear verstellbaren Tragwelle befestigt, die sich quer zum Förderband erstreckt.

Mit einem oder beiden Enden der Tragwelle ist eine bzw. jeweils eine Spannvorrichtung verbunden, die eine Hebelkonstruktion oder vorgespannte Federn aufweist, um die notwendige Vorspannung zu erzeugen. Mitunter weist eine Spannvorrichtung auch einen Antriebsmotor auf. Der Antriebsmotor wird dann von einer elektrischen oder elektronischen Steuerung angesteuert.

Ein Beispiel für eine Förderband-Abstreifvorrichtung der in Rede stehenden Art ist Gegenstand des Dokuments DE 20 2014 007 229 U1. Anbringungsvarianten für Abstreifsegmente an einer Tragwelle einer Förderband-Abstreifvorrichtung findet man im Stand der Technik ferner in der DE 20 2009 004 182 U1 und der DE 20 2012 010 945 U1. GB1578582A offenbart die Merkmale des Oberbegriffes des Anspruchs 1.

Ausgangspunkt für die Lehre der vorliegenden Erfindung ist eine Förderband-Abstreifvorrichtung, bei der schon eine verbesserte Auswechselbarkeit der Abstreifsegmente realisiert ist (DE 20 2017 003 979 U1).

Bei dieser Förderband-Abstreifvorrichtung ist ein Abstreifsegment zur Anbringung an einer Tragwelle der Förderband-Abstreifvorrichtung vorgesehen. Das Abstreifsegment hat ein formschlüssig Drehmoment übertragendes mit der Tragwelle verbindbares Halteende und ein davon beabstandetes, an einem Förderband zur Anlage bringbares Abstreifende. Am Halteende ist eine Verschiebeführung einstückig ausgebildet. Alternativ kann das Halteende mit einer Verschiebeführung lösbar verbunden sein. Das Abstreifsegment ist mittels der Verschiebeführung an der Tragwelle formschlüssig Drehmoment übertragend und in Längsrichtung der Tragwelle verschiebbar anbringbar. Das Halteende und die Verschiebeführung weisen Querseiten auf, die im an der Tragwelle angebrachten Zustand des Abstreifsegmentes quer zu der Längsrichtung der Tragwelle verlaufen. Das Abstreifsegment weist an beiden Querseiten Verbindungselemente auf, mit denen zwei nebeneinander auf der Tragwelle angeordnete Abstreifsegmente miteinander in Längsrichtung wirksam kuppelbar sind.

Auf diese Weise sind die Abstreifsegmente, wenn sie an der Tragwelle nebeneinander angebracht sind, alle miteinander gekuppelt. Dadurch ist es möglich, die Abstreifsegmente von der Tragwelle in Längsrichtung abzuziehen, indem man nur am vordersten, also unter dem Förderband seitlich äußersten Abstreifsegment bzw. dessen Verschiebeführung zieht. Alle gekuppelten Abstreifsegmente werden bei diesem Herausziehen des vordersten Abstreifsegmentes mitgeschleppt. Wenn ein Abstreifsegment soweit herausgezogen wurde, dass es nicht mehr mit der Tragwelle verbunden ist, kann es von den restlichen gekuppelten Abstreifsegmenten entkuppelt und seitlich einzeln abgenommen werden.

In der Praxis hat sich herausgestellt, dass die bei dem seitlichen Ziehen an allen miteinander gekuppelten Abstreifsegmenten aufzubringenden Kräfte sehr hoch sind. Dies gilt natürlich umso mehr, je höher die Anzahl gekuppelter Abstreifsegmente ist und je schwerer die gekuppelten Abstreifsegmente sind. Besonders hohe Kräfte sind bei dem typischen Fall aufzubringen, bei dem die Abstreifsegmente durch das Abstreifen von Schüttgut verschmutzt sind. Hier ist es häufig so, dass die Verschmutzungen hohe Verbindungskräfte zwischen den Abstreifsegmenten untereinander und/oder zwischen den Abstreifsegmenten und der Tragwelle verursachen.

Der Lehre der vorliegenden Erfindung liegt daher das Problem zugrunde, die zuvor beschriebene Förderband-Abstreifvorrichtung hinsichtlich der Handhabbarkeit zu verbessern.

Das zuvor aufgezeigte Problem ist gelöst durch eine Förderband-Abstreifvorrichtung gemäß Anspruch 1. Bevorzugte Ausgestaltungen und Weiterbildungen der erfindungsgemäßen Förderband-Abstreifvorrichtung sind Gegenstand der diesbezüglichen Unteransprüche.

Die Förderband-Abstreifvorrichtung gemäß Anspruch 1 hat eine Tragwelle und mindestens zwei nebeneinander an der Tragwelle formschlüssig Drehmoment übertragend angeordnete Verschiebeführungen. Jede der beiden Verschiebeführungen ist nach Lösen einer Befestigungseinrichtung in Längsrichtung der Tragwelle verschiebbar und mit einem Halteende eines Abstreifsegments verbunden, wobei das Abstreifsegment ein vom Halteende beabstandetes, an dem Förderband zur Anlage bringbares Abstreifende aufweist. Die beiden Verschiebeführungen sind mittels einer Verbindungseinrichtung miteinander in Längsrichtung der Tragwelle wirksam kuppelbar.

Die Grundidee der vorliegenden Erfindung besteht darin, die Förderband-Abstreifvorrichtung so auszugestalten, dass die eine Verschiebeführung von der mit ihr gekuppelten Verschiebeführung und ggfs. weiteren, mit der anderen Verschiebeführung gekuppelten Verschiebeführungen (und damit auch die jeweiligen Abstreifsegmente) räumlich entfernt werden kann, während die eine Verschiebeführung an der Tragwelle, insbesondere an einem Mittelstück der Tragwelle, angeordnet ist, vorzugsweise ohne die noch gekuppelten Verschiebeführungen zu verschieben. Die Verschiebeführungen sind also quasi noch auf der Tragwelle vereinzelbar. Dies verbessert die Handhabbarkeit der Förderband-Abstreifvorrichtung. Insbesondere sind die zur Vereinzelung eines Abstreifsegments aufzubringenden Kräfte geringer als die zum Verschieben aller gekuppelten Abstreifsegmente aufzubringenden Kräfte. Bei Verschmutzungen der Abstreifsegmente sind darüber hinaus die zur Verschiebung vereinzelter Abstreifsegmente aufzubringenden Kräfte geringer als die zum Verschieben aller gekuppelten Abstreifsegmente aufzubringenden Kräfte.

Dazu ist die eine Verschiebeführung im Zustand der Kupplung mit der anderen Verschiebeführung in einen vordefinierten Abstand von der anderen Verschiebeführung entlang der Längsrichtung der Tragwelle verschiebbar und dann in dem vordefinierten Abstand zu der anderen Verschiebeführung zusammen mit der anderen Verschiebeführung entlang der Längsrichtung der Tragwelle verschiebbar aufgrund der Kupplung mittels der Verbindungseinrichtung.

Vorzugsweise ist die eine der beiden Verschiebeführungen im Zustand der Kupplung mit der anderen Verschiebeführung mittels der Verbindungseinrichtung in den vordefinierten Abstand von der anderen Verschiebeführung entlang der Längsrichtung der Tragwelle verschiebbar und dann mittels der Verbindungseinrichtung in dem vordefinierten Abstand zu der anderen Verschiebeführung zusammen mit der anderen Verschiebeführung entlang der Längsrichtung der Tragwelle verschiebbar aufgrund der Kupplung mittels der Verbindungseinrichtung.

Bevorzugt ist eine der beiden Verschiebeführungen im Zustand der Kupplung mit der anderen Verschiebeführung durch Ausübung einer Zugkraft auf die eine Verschiebeführung in den vordefinierten Abstand von der anderen Verschiebeführung entlang der Längsrichtung der Tragwelle verschiebbar und dann durch Ausübung einer Zugkraft auf die eine Verschiebeführung mittels der Verbindungseinrichtung in dem vordefinierten Abstand zu der anderen Verschiebeführung zusammen mit der anderen Verschiebeführung entlang der Längsrichtung der Tragwelle in Richtung der Zugkraft verschiebbar aufgrund der Kupplung mittels der Verbindungseinrichtung.

Die Verbindungseinrichtung kann an beiden Verschiebeführungen fixiert sein, insbesondere mittels eines Fixierelements der Verbindungseinrichtung.

Die Verbindungseinrichtung kann ein Verbindungselement aufweisen, das sich von der einen Verschiebeführung zur anderen Verschiebeführung erstreckt. Insbesondere kann die Verbindungseinrichtung genau ein Verbindungselement aufweisen, das sich über alle Verschiebeführungen erstreckt.

Vorzugsweise hängt der vordefinierte Abstand von der Länge des Verbindungselements zwischen den beiden Verschiebeführungen ab. Alternativ kann der vordefinierte Abstand von dem Elastizitätsmodul des Verbindungselements abhängen.

Bei einer bevorzugten Ausführungsform hat jede der beiden Verschiebeführungen Längsseiten, die im an der Tragwelle angebrachten Zustand entlang der Längsrichtung der Tragwelle verlaufen. An mindestens einer Längsseite jeder der beiden Verschiebeführungen ist die Verbindungseinrichtung fixiert, vorzugsweise jeweils mittels des Fixierelements der Verbindungseinrichtung.

Es kann vorteilhaft sein, wenn die Verbindungseinrichtung zwei Verbindungselemente aufweist, wobei sich das eine Verbindungselement von einer Längsseite der einen Verschiebeführung zur einen Längsseite der anderen Verschiebeführung erstreckt und wobei sich das andere Verbindungselement von der anderen Längsseite der einen Verschiebeführung zur anderen Längsseite der anderen Verschiebeführung erstreckt.

Im Folgenden werden bevorzugte Ausführungsformen der Verbindungseinrichtung erläutert. Die verschiedenen Ausführungsformen können miteinander kombiniert werden.

Bei einer bevorzugten Ausführungsform weist das Verbindungselement bzw. weisen beide Verbindungselemente jeweils eine Kette oder ein Seil auf oder das Verbindungselement ist bzw. beide Verbindungselemente sind jeweils eine Kette oder ein Seil. Die Kette bzw. das Seil ist an beiden Verschiebeführungen mittels eines Fixierelements der Verbindungseinrichtung fixiert. Die Länge der Kette oder des Seils zwischen den Fixierelementen der beiden Verschiebeführungen ist größer als der Abstand zwischen den Fixierelementen der beiden Verschiebeführungen, wenn die beiden Verschiebeführungen aneinander anliegen.

Bei dieser Ausführungsform ist die eine Verschiebeführung im Zustand der Kupplung mit der anderen Verschiebeführung durch Ausübung einer Zugkraft auf die Kette bzw. das Seil in den vordefinierten Abstand von der anderen Verschiebeführung entlang der Längsrichtung der Tragwelle verschiebbar und dann durch Ausübung einer Zugkraft auf die Kette bzw. das Seil in dem vordefinierten Abstand zu der anderen Verschiebeführung zusammen mit der anderen Verschiebeführung entlang der Längsrichtung der Tragwelle in Richtung der Zugkraft verschiebbar aufgrund der Kupplung mittels der Kette bzw. des Seils.

Bei einer weiteren bevorzugten Ausführungsform weist das Verbindungselement bzw. weisen beide Verbindungselemente jeweils ein elastisches Band auf oder ist das Verbindungselement bzw. sind beide Verbindungselemente jeweils ein elastisches Band.

Bei dieser Ausführungsform ist die eine Verschiebeführung im Zustand der Kupplung mit der anderen Verschiebeführung durch Ausübung einer Zugkraft auf die eine Verschiebeführung in den vordefinierten Abstand von der anderen Verschiebeführung entlang der Längsrichtung der Tragwelle verschiebbar und dann durch Ausübung einer Zugkraft auf die eine Verschiebeführung in dem vordefinierten Abstand zu der anderen Verschiebeführung zusammen mit der anderen Verschiebeführung entlang der Längsrichtung der Tragwelle in Richtung der Zugkraft verschiebbar aufgrund der Kupplung mittels des elastischen Bandes.

Bei einer weiteren bevorzugten Ausführungsform hat die Verbindungseinrichtung an jeder der beiden Verschiebeführungen einen Bolzen und ein Verbindungselement, das sich von der einen Verschiebeführung zur anderen Verschiebeführung erstreckt, wenn die beiden Verschiebeführungen aneinander anliegen. Jedes Verbindungselement weist eine Aussparung auf. Im Zustand der Kupplung mit der anderen Verschiebeführung nimmt die Aussparung des Verbindungselements der einen Verschiebeführung den Bolzen der anderen Verschiebeführung derart auf, dass der Bolzen der anderen Verschiebeführung in der Aussparung des Verbindungselements der einen Verschiebeführung entlang der Längsrichtung der Tragwelle um den vordefinierten Abstand verschiebbar ist, wobei die Aussparung des Verbindungselements der einen Verschiebeführung für den Bolzen der anderen Verschiebeführung einen Anschlag bildet, sodass beide Verschiebeführungen zusammen in dem vordefinierten Abstand zueinander entlang der Längsrichtung der Tragwelle verschiebbar sind.

Bei einer weiteren bevorzugten Ausführungsform hat die Verbindungseinrichtung einen Hohlzylinder an jeder der beiden Verschiebeführungen und einen darin angeordneten Kolben. Der Kolben der einen Verschiebeführung ist relativ zu dem Hohlzylinder der einen Verschiebeführung beweglich und mit dem Hohlzylinder der anderen Verschiebeführung derart gekuppelt, dass
- die eine Verschiebeführung von der anderen Verschiebeführung entlang der Längsrichtung der Tragwelle wegschiebbar ist, bis ein Anschlag des Kolbens der einen Verschiebeführung an einem Begrenzer des Hohlzylinders der einen Verschiebeführung anliegt und
- beide Verschiebeführungen zusammen in dem vordefinierten Abstand zueinander entlang der Längsrichtung der Tragwelle verschiebbar sind, während der Anschlag des Kolbens der einen Verschiebeführung an dem Begrenzer des Hohlzylinders der einen Verschiebeführung anliegt.

Bei dieser Ausführungsform ist es von Vorteil, wenn sich jeder Hohlzylinder über die gesamte in Längsrichtung der Tragwelle verlaufende Länge einer der Längsseiten der zugehörigen Verschiebeführung erstreckt und dass die Erstreckung jedes Kolbens in Längsrichtung der Tragwelle länger ist als der vordefinierte Abstand.

Bei einer weiteren bevorzugten Ausführungsform hat die Verbindungseinrichtung für die beiden Verschiebeführungen zwei gelenkig miteinander verbundene Verbindungsplatten. Die eine Verbindungsplatte ist drehbar an der einen Verschiebeführung und die andere Verbindungsplatte ist drehbar an der anderen Verschiebeführung fixiert.

Bei dieser Ausführungsform ist die eine Verschiebeführung im Zustand der Kupplung mit der anderen Verschiebeführung durch Ausübung einer Zugkraft auf die eine Verschiebeführung in den vordefinierten Abstand von der anderen Verschiebeführung entlang der Längsrichtung der Tragwelle verschiebbar und dann durch Ausübung einer Zugkraft auf die eine Verschiebeführung in dem vordefinierten Abstand zu der anderen Verschiebeführung zusammen mit der anderen Verschiebeführung entlang der Längsrichtung der Tragwelle in Richtung der Zugkraft verschiebbar aufgrund der Kupplung mittels der Verbindungseinrichtung.

Bei dieser Ausführungsform hängt der vordefinierte Abstand von der Länge bzw. der längsten Erstreckung der beiden Verbindungsplatten ab.

Bei allen Ausführungsformen ist es bevorzugt, wenn die Förderband-Abstreifvorrichtung eine Betätigungsvorrichtung zum Verschieben der Verschiebeführungen in Längsrichtung der Tragwelle aufweist. Besonders bevorzugt wirkt die Betätigungsvorrichtung mit der Verbindungseinrichtung zusammen.

Vorzugsweise sind die Verschiebeführungen als einseitig offenes Hohlprofil oder T-Profilfuß ausgeführt.

Die Verschiebeführungen können einen Adapter zur Anbringung eines spezifischen Abstreifsegments, insbesondere eines Standard-Abstreifsegments, aufweisen.

Eine Verschiebevorrichtung zur Anbringung eines Abstreifsegments an einer Tragwelle einer Förderband-Abstreifvorrichtung ist vorgesehen.

Die Verschiebeführung ist mit dem Abstreifsegment verbindbar ist, an der Tragwelle formschlüssig Drehmoment übertragend anbringbar und nach Lösen einer Befestigungseinrichtung der Förderband-Abstreifvorrichtung in Längsrichtung der Tragwelle verschiebbar. Die Verschiebeführung ist mittels einer Verbindungseinrichtung mit einer (unmittelbar) neben der Verschiebeführung auf der Tragwelle angeordneten Verschiebeführung in Längsrichtung der Tragwelle wirksam kuppelbar. Die Verschiebeführung ist im Zustand der Kupplung mit der benachbarten Verschiebeführung in einen vordefinierten Abstand von der benachbarten Verschiebeführung entlang der Längsrichtung der Tragwelle verschiebbar und dann in dem vordefinierten Abstand zu der benachbarten Verschiebeführung zusammen mit der benachbarten Verschiebeführung entlang der Längsrichtung der Tragwelle verschiebbar aufgrund der Kupplung mittels der Verbindungseinrichtung.

Vorzugsweise ist die Verschiebeführung im Zustand der Kupplung mit der benachbarten Verschiebeführung mittels der Verbindungseinrichtung in den vordefinierten Abstand von der benachbarten Verschiebeführung entlang der Längsrichtung der Tragwelle verschiebbar und dann mittels der Verbindungseinrichtung in dem vordefinierten Abstand zu der benachbarten Verschiebeführung zusammen mit der benachbarten Verschiebeführung entlang der Längsrichtung der Tragwelle verschiebbar aufgrund der Kupplung mittels der Verbindungseinrichtung.

Bevorzugt ist die Verschiebeführung im Zustand der Kupplung mit der benachbarten Verschiebeführung durch Ausübung einer Zugkraft auf die Verschiebeführung in den vordefinierten Abstand von der benachbarten Verschiebeführung entlang der Längsrichtung der Tragwelle verschiebbar und dann durch Ausübung einer Zugkraft auf die Verschiebeführung mittels der Verbindungseinrichtung in dem vordefinierten Abstand zu der benachbarten Verschiebeführung zusammen mit der benachbarten Verschiebeführung entlang der Längsrichtung der Tragwelle in Richtung der Zugkraft verschiebbar aufgrund der Kupplung mittels der Verbindungseinrichtung.

Die Verbindungseinrichtung kann an beiden Verschiebeführungen fixiert sein, insbesondere mittels eines Fixierelements der Verbindungseinrichtung.

Die Verbindungseinrichtung kann ein Verbindungselement aufweisen, das sich von der Verschiebeführung zur benachbarten Verschiebeführung erstreckt.

Vorzugsweise hängt der vordefinierte Abstand von der Länge des Verbindungselements zwischen der Verschiebeführung und der benachbarten Verschiebeführung ab. Alternativ kann der vordefinierte Abstand von dem Elastizitätsmodul des Verbindungselements abhängen.

Bevorzugt hat die Verschiebeführung Längsseiten, die im an der Tragwelle angebrachten Zustand entlang der Längsrichtung der Tragwelle verlaufen. An mindestens einer Längsseite der Verschiebeführung ist die Verbindungseinrichtung fixiert, vorzugsweise mittels des Fixierelements der Verbindungseinrichtung.

Es kann vorteilhaft sein, wenn die Verbindungseinrichtung zwei Verbindungselemente aufweist, wobei sich das eine Verbindungselement von einer Längsseite der Verschiebeführung zur einen Längsseite der benachbarten Verschiebeführung erstreckt.

Bei einer bevorzugten Ausführungsform weist das Verbindungselement eine Kette oder ein Seil auf oder das Verbindungselement ist eine Kette oder ein Seil.

Bei einer weiteren bevorzugten Ausführungsform weist das Verbindungselement ein elastisches Band auf oder ist das Verbindungselement ein elastisches Band.

Bei einer weiteren bevorzugten Ausführungsform hat die Verbindungseinrichtung an der Verschiebeführung einen Bolzen und ein Verbindungselement, das sich von der Verschiebeführung zur benachbarten Verschiebeführung erstreckt, wenn die Verschiebeführung an der benachbarten Verschiebeführung anliegt. Das Verbindungselement weist eine Aussparung auf. Im Zustand der Kupplung mit der benachbarten Verschiebeführung nimmt die Aussparung des Verbindungselements der Verschiebeführung den Bolzen der benachbarten Verschiebeführung derart auf, dass der Bolzen der benachbarten Verschiebeführung in der Aussparung des Verbindungselements der Verschiebeführung entlang der Längsrichtung der Tragwelle um den vordefinierten Abstand verschiebbar ist, wobei die Aussparung des Verbindungselements der Verschiebeführung für den Bolzen der benachbarten Verschiebeführung einen Anschlag bildet, sodass die Verschiebeführung zusammen mit der benachbarten Verschiebeführung in dem vordefinierten Abstand zueinander entlang der Längsrichtung der Tragwelle verschiebbar ist.

Bei einer weiteren bevorzugten Ausführungsform hat die Verbindungseinrichtung einen Hohlzylinder an der Verschiebeführung und einen darin angeordneten Kolben. Der Kolben ist relativ zu dem Hohlzylinder beweglich und mit dem Hohlzylinder der benachbarten Verschiebeführung derart kuppelbar, dass
- die Verschiebeführung von der benachbarten Verschiebeführung entlang der Längsrichtung der Tragwelle wegschiebbar ist, bis ein Anschlag des Kolbens der Verschiebeführung an einem Begrenzer des Hohlzylinders der Verschiebeführung anliegt und
- die Verschiebeführung zusammen mit der benachbarten Verschiebeführung in dem vordefinierten Abstand zueinander entlang der Längsrichtung der Tragwelle verschiebbar ist, während der Anschlag des Kolbens der Verschiebeführung an dem Begrenzer des Hohlzylinders der Verschiebeführung anliegt.

Bei dieser Ausführungsform ist es von Vorteil, wenn sich der Hohlzylinder über die gesamte in Längsrichtung der Tragwelle verlaufende Länge einer der Längsseiten der Verschiebeführung erstreckt und dass die Erstreckung des Kolbens in Längsrichtung der Tragwelle länger ist als der vordefinierte Abstand.

Bei einer weiteren bevorzugten Ausführungsform hat die Verbindungseinrichtung für die Verschiebeführung zwei gelenkig miteinander verbundene Verbindungsplatten. Die eine Verbindungsplatte ist drehbar an der Verschiebeführung und die andere Verbindungsplatte ist drehbar an der benachbarten Verschiebeführung fixiert.

Bei dieser Ausführungsform hängt der vordefinierte Abstand von der Länge bzw. der längsten Erstreckung der beiden Verbindungsplatten ab.

Vorzugsweise ist die Verschiebeführung als einseitig offenes Hohlprofil oder T-Profilfuß ausgeführt.

Die Verschiebeführung kann einen Adapter zur Anbringung eines spezifischen Abstreifsegments, insbesondere eines Standard-Abstreifsegments, aufweisen.

Im Folgenden wird die Erfindung nun anhand einer lediglich bevorzugte Ausführungsbeispiele darstellenden Zeichnung näher erläutert. In der Zeichnung zeigt
- Fig. 1: einen Stand der Technik in schematisch vereinfachter Darstellung, um das Grundprinzip einer Förderband-Abstreifvorrichtung für ein Förderband einer Förderbandanlage zu erläutern,
- Fig. 2: wiederum aus dem Stand der Technik, eine Seitenansicht einer typischen Förderband-Abstreifvorrichtung an einem Förderband,
- Fig. 3: schematisch in einer perspektivischen Ansicht die hier wesentlichen Teile eines ersten Ausführungsbeispiels einer erfindungsgemäßen Förderband-Abstreifvorrichtung für ein Förderband einer Förderbandanlage,
- Fig. 4: schematisch in einer Seitenansicht die Förderband-Abstreifvorrichtung aus Fig. 3,
- Fig. 5: schematisch in einer Frontansicht die Förderband-Abstreifvorrichtung aus Fig. 3,
- Fig. 6: schematisch in einer Draufsicht die Förderband-Abstreifvorrichtung aus Fig. 3,
- Fig. 7: schematisch in einer perspektivischen Ansicht die hier wesentlichen Teile eines zweiten Ausführungsbeispiels einer erfindungsgemäßen Förderband-Abstreifvorrichtung für ein Förderband einer Förderbandanlage,
- Fig. 8: schematisch in einer Seitenansicht die Förderband-Abstreifvorrichtung aus Fig. 7,
- Fig. 9: schematisch in einer Frontansicht die Förderband-Abstreifvorrichtung aus Fig. 7,
- Fig. 10: schematisch in einer Draufsicht die Förderband-Abstreifvorrichtung aus Fig. 7,
- Fig. 11: schematisch in einer perspektivischen Ansicht die hier wesentlichen Teile eines dritten Ausführungsbeispiels einer erfindungsgemäßen Förderband-Abstreifvorrichtung für ein Förderband einer Förderbandanlage,
- Fig. 12: schematisch in einer perspektivischen Ansicht die hier wesentlichen Teile eines vierten Ausführungsbeispiels einer erfindungsgemäßen Förderband-Abstreifvorrichtung für ein Förderband einer Förderbandanlage,
- Fig. 13: schematisch in einer Seitenansicht die Förderband-Abstreifvorrichtung aus Fig. 12,
- Fig. 14: schematisch in einer Frontansicht die Förderband-Abstreifvorrichtung aus Fig. 12,
- Fig. 15: schematisch in einer Draufsicht die Förderband-Abstreifvorrichtung aus Fig. 12,
- Fig. 16: schematisch in einer perspektivischen Ansicht die hier wesentlichen Teile eines fünften Ausführungsbeispiels einer erfindungsgemäßen Förderband-Abstreifvorrichtung für ein Förderband einer Förderbandanlage,
- Fig. 17: schematisch in einer Seitenansicht die Förderband-Abstreifvorrichtung aus Fig. 16,
- Fig. 18: schematisch in einer Frontansicht die Förderband-Abstreifvorrichtung aus Fig. 16,
- Fig. 19: schematisch in einer Draufsicht die Förderband-Abstreifvorrichtung aus Fig. 16,
- Fig. 20: schematisch in einer perspektivischen Ansicht die hier wesentlichen Teile eines sechsten Ausführungsbeispiels einer erfindungsgemäßen Förderband-Abstreifvorrichtung für ein Förderband einer Förderbandanlage,
- Fig. 21: schematisch in einer Seitenansicht die Förderband-Abstreifvorrichtung aus Fig. 20,
- Fig. 22: schematisch in einer Frontansicht die Förderband-Abstreifvorrichtung aus Fig. 20,
- Fig. 23: schematisch in einer Draufsicht die Förderband-Abstreifvorrichtung aus Fig. 20,
- Fig. 24: schematisch in einer perspektivischen Ansicht die hier wesentlichen Teile eines siebten Ausführungsbeispiels einer erfindungsgemäßen Förderband-Abstreifvorrichtung für ein Förderband einer Förderbandanlage,
- Fig. 25: schematisch in einer Seitenansicht die Förderband-Abstreifvorrichtung aus Fig. 24,
- Fig. 26: schematisch in einer Frontansicht die Förderband-Abstreifvorrichtung aus Fig. 24,
- Fig. 27: schematisch in einer Draufsicht die Förderband-Abstreifvorrichtung aus Fig. 24,
- Fig. 28: schematisch in einer perspektivischen Ansicht die hier wesentlichen Teile eines achten Ausführungsbeispiels einer erfindungsgemäßen Förderband-Abstreifvorrichtung für ein Förderband einer Förderbandanlage,
- Fig. 29: schematisch in einer Seitenansicht die Förderband-Abstreifvorrichtung aus Fig. 28,
- Fig. 30: schematisch in einer Frontansicht die Förderband-Abstreifvorrichtung aus Fig. 28,
- Fig. 31: schematisch in einer Draufsicht die Förderband-Abstreifvorrichtung aus Fig. 28,
- Fig. 32: schematisch einen Längsschnitt durch einen Teil der Förderband-Abstreifvorrichtung aus Fig. 28,
- Fig. 33: schematisch in einer perspektivischen Ansicht die hier wesentlichen Teile eines neunten Ausführungsbeispiels einer erfindungsgemäßen Förderband-Abstreifvorrichtung für ein Förderband einer Förderbandanlage,
- Fig. 34: schematisch in einer Seitenansicht die Förderband-Abstreifvorrichtung aus Fig. 33,
- Fig. 35: schematisch in einer Frontansicht die Förderband-Abstreifvorrichtung aus Fig. 33,
- Fig. 36: schematisch in einer Draufsicht die Förderband-Abstreifvorrichtung aus Fig. 33.

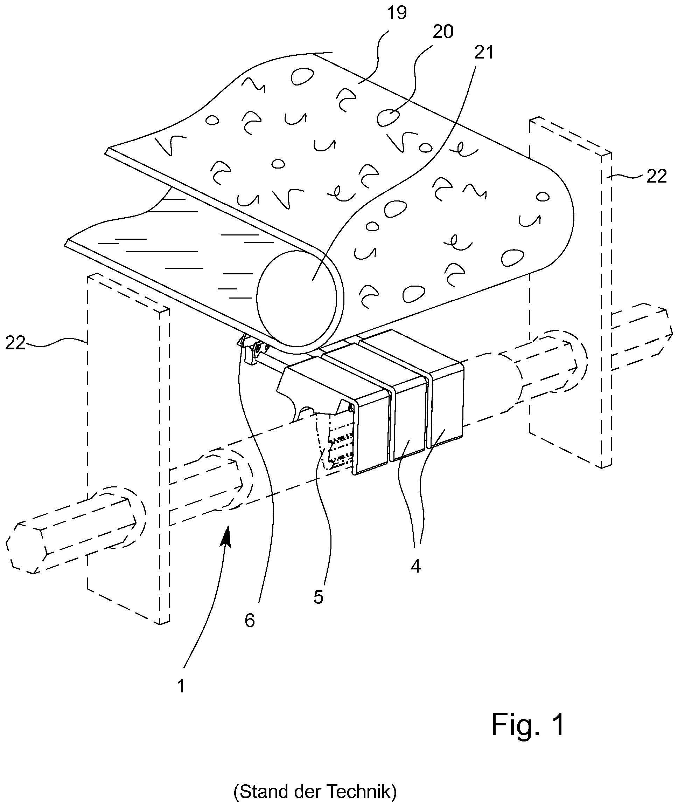

Fig. 1 zeigt in schematischer Ansicht einen Ausschnitt eines Förderbands 19 einer Förderbandanlage, auf dem sich Schüttgut 20 befindet. Dieses Förderband 19 läuft von links hinten nach rechts vorne in Fig. 1. Es wird an einer Umlenkwalze 21 umgelenkt, so dass sein unterer Bandabschnitt von rechts vorne nach links hinten, also in Richtung des Ausgangspunktes zurückläuft.

Unterhalb des Förderbandes 19 und nicht weit von der Umlenkwalze 21 sieht man eine Förderband-Abstreifvorrichtung mit einer Tragwelle 1.

In Fig. 1 erkennt man bei der dort nur gestrichelt dargestellten Tragwelle 1 links und rechts jeweils eine Halterung 22 für die Tragwelle 1. In den Halterungen 22 ist die Tragwelle 1 hier drehbar gelagert. Nicht dargestellt ist in Fig. 1 eine Spannvorrichtung, die auf die Tragwelle 1 eine passende Vorspannkraft aufbringt. Insoweit wird auf den Stand der Technik verwiesen.

Auf der Tragwelle 1 sind in Fig. 1 beispielhaft drei Abstreifsegmente 4 dargestellt. Jedes Abstreifsegment 4 hat ein am Förderband 19 zur Anlage kommendes Abstreifende 6 sowie ein formschlüssig Drehmoment übertragend mit der Tragwelle 1 verbundenes Halteende 5, das vom Abstreifende 6 beabstandet ist.

Im hier dargestellten Beispiel des Standes der Technik hat jedes Abstreifsegment 4 einen Korpus aus Polyurethan, in dem das Abstreifende 6 in Form einer Tragstange mit endseitiger Abstreiflippe gelagert ist. Der Korpus des Abstreifsegmentes 4 setzt sich im Halteende 5 fort, das in eine entsprechende Aufnahme der Tragwelle 1 eingesteckt ist. Das ist nur eine von verschiedenen Möglichkeiten des Standes der Technik, ein Abstreifsegment 4 an einer Tragwelle 1 der Förderband-Abstreifvorrichtung anzubringen.

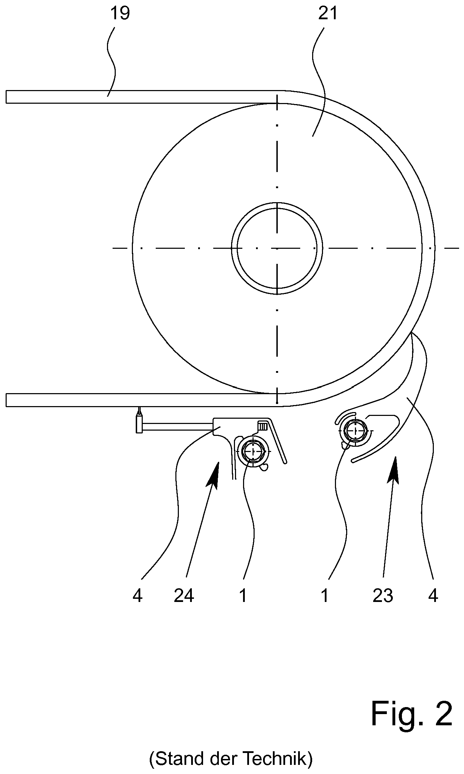

Fig. 2 zeigt schematisch einen weiteren Stand der Technik, nämlich eine Seitenansicht einer typischen Förderband-Abstreifvorrichtung an einem Förderband 19. Rechts in Fig. 2 sieht man einen typischen Primärabstreifer 23 an der Umlenkwalze 3 und links einen typischen Sekundärabstreifer 24, der von unten am unteren rücklaufenden Abschnitt des Förderbandes 19 angreift. Auch hierzu sei auf den Stand der Technik verwiesen.

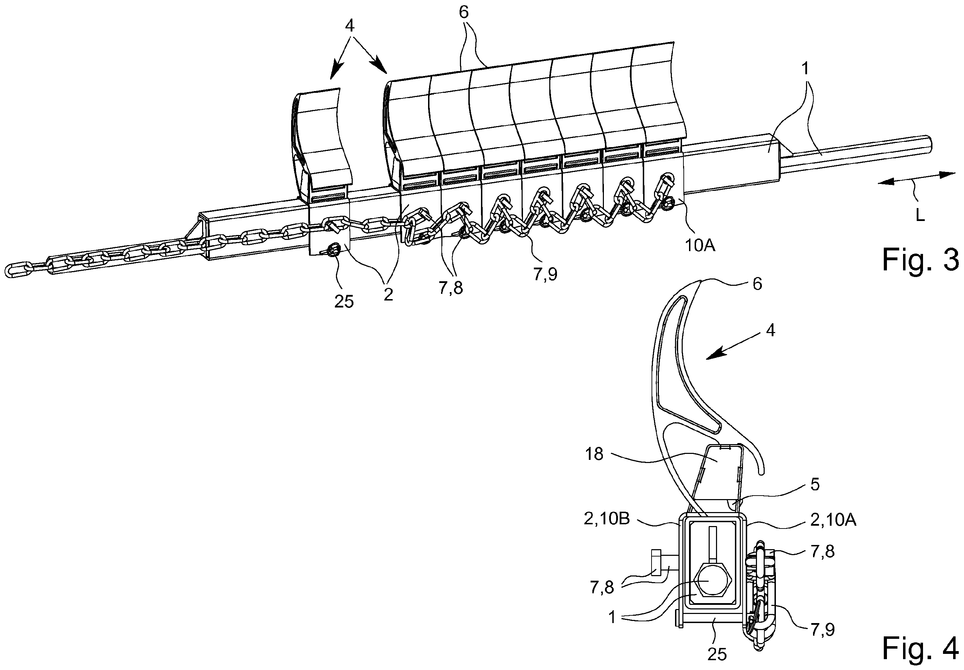

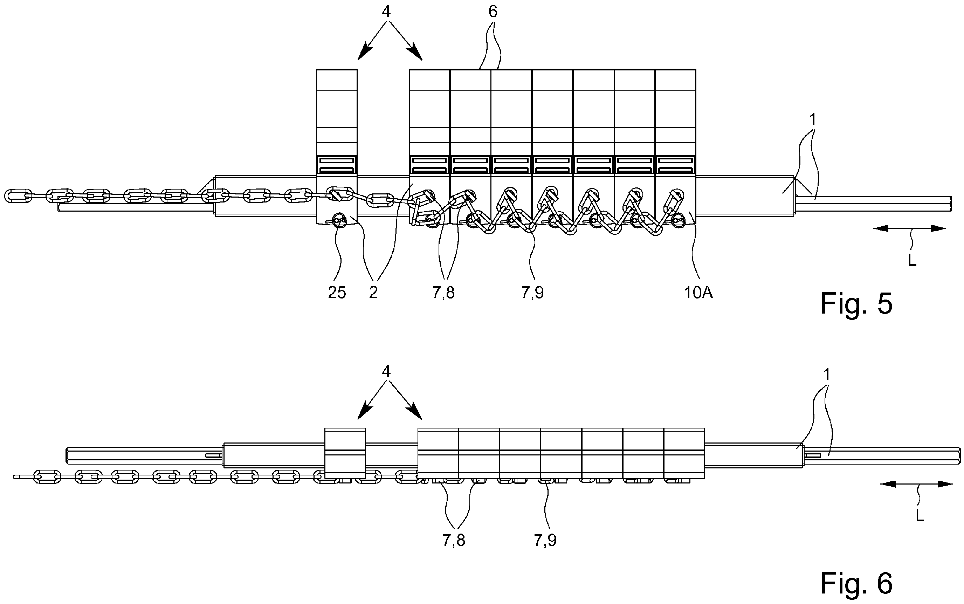

Fig. 3 zeigt schematisch in einer perspektivischen Ansicht die hier wesentlichen Teile eines ersten Ausführungsbeispiels einer erfindungsgemäßen Förderband-Abstreifvorrichtung für ein Förderband einer Förderbandanlage. Die Fig. 4 bis 6 zeigen weitere Ansichten dieser Förderband-Abstreifvorrichtung. Die Förderband-Abstreifvorrichtung hat eine Tragwelle 1 und acht nebeneinander an der Tragwelle 1 formschlüssig Drehmoment übertragend angeordnete Verschiebeführungen 2.

Jede der Verschiebeführungen 2 ist nach Lösen einer hier nicht dargestellten Befestigungseinrichtung in Längsrichtung L der Tragwelle 1 verschiebbar und mit einem Halteende 5 eines Abstreifsegments 4 verbunden. Alternativ können die Verschiebeführungen 2 mit dem Halteende 5 einstückig ausgebildet sein. Dann muss das Abstreifsegment 4 ein speziell an den vorliegenden Anwendungsfall angepasstes Abstreifsegment 4 sein.

Jedes Abstreifsegment 4 weist ein vom Halteende 5 beabstandetes, an dem Förderband zur Anlage bringbares Abstreifende 6 auf.

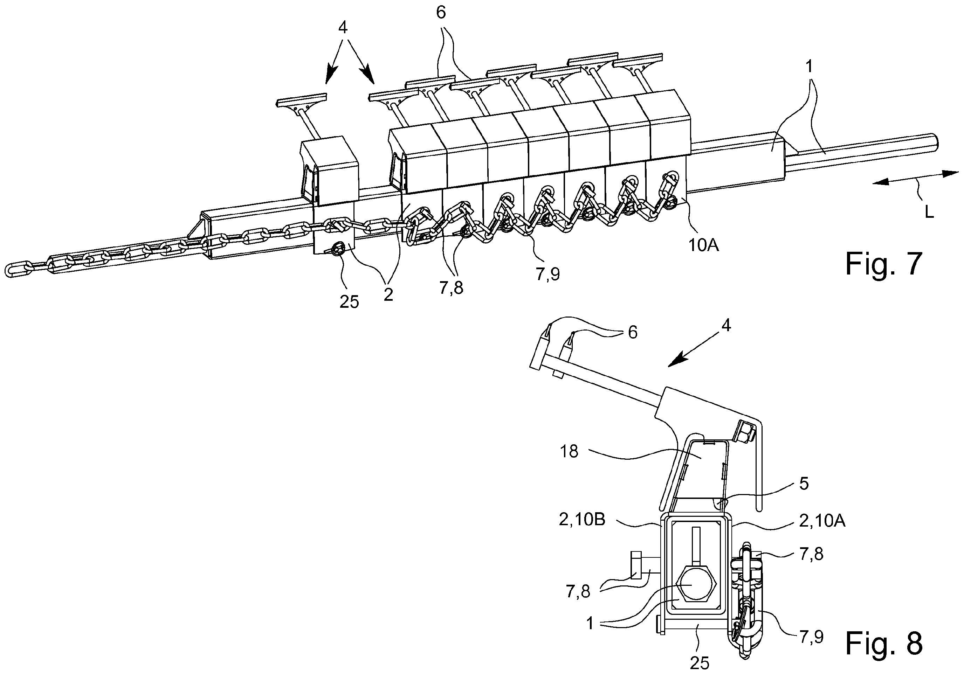

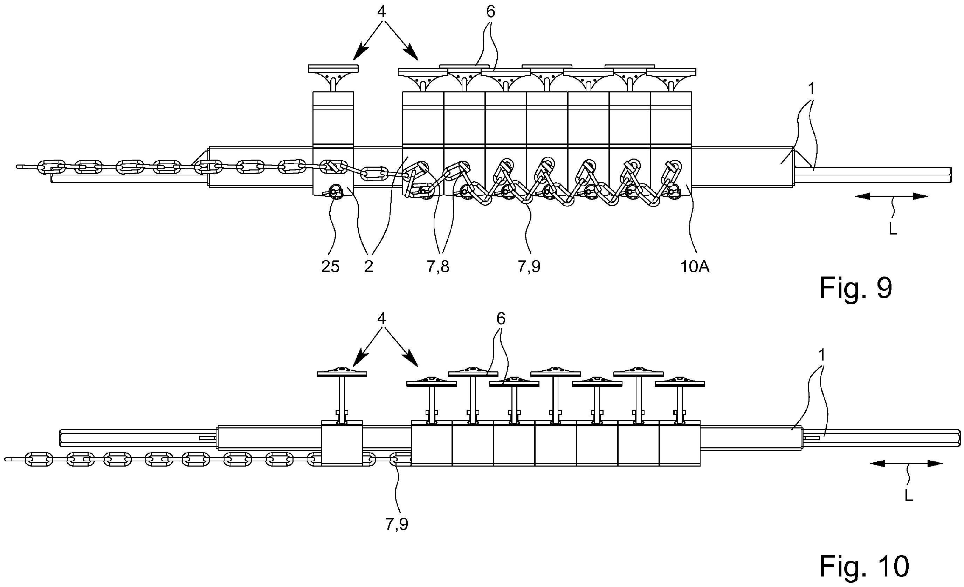

Hier handelt es sich um Abstreifsegmente 4 eines Primärabstreifers 23. Alternativ kann es sich um Abstreifsegmente 4 eines Sekundärabstreifers 24 handeln (siehe Fig. 7 bis 11).

Die Verschiebeführungen 2 sind mittels einer Verbindungseinrichtung 7 miteinander in Längsrichtung L der Tragwelle 1 wirksam kuppelbar und hier auch gekuppelt.

Bei dem hier dargestellten und bevorzugten Ausführungsbeispiel weist die Verbindungseinrichtung 7 genau ein Verbindungselement 9 auf, das sich über alle Verschiebeführungen 2 und darüber hinaus erstreckt. Das Verbindungselement 9 ist hier eine Kette.

Vorzugsweise weist die Kette Metall auf oder besteht aus Metall. Bevorzugt handelt es sich um eine Rundgliederkette.

Jede der Verschiebeführungen 2 hat Längsseiten 10A, 10B, die im an der Tragwelle 1 angebrachten Zustand entlang der Längsrichtung L der Tragwelle 1 verlaufen. An einer Längsseite 10A jeder Verschiebeführung 2 ist die Verbindungseinrichtung 7 jeweils mittels eines Fixierelements 8 fixiert. Die Länge der Kette 9 bzw. des Abschnitts der Kette 9 zwischen den Fixierelementen 8 zweier unmittelbar nebeneinander angeordneter (also benachbarter) Verschiebeführungen 2 ist größer als der Abstand zwischen den Fixierelementen 8 dieser beiden Verschiebeführungen 2, wenn diese beiden Verschiebeführungen 2 aneinander anliegen. Der jeweilige vordefinierte Abstand hängt von der Länge Kette 9 bzw. des Abschnitts der Kette 9 zwischen jeweils zwei benachbarten Verschiebeführungen 2 ab.

Bei dem in Fig. 3 dargestellten und bevorzugten Ausführungsbeispiel ist die von links ausgehend erste Verschiebeführung 2 im Zustand der Kupplung mit der von links ausgehend zweiten Verschiebeführung 2 (in Fig. 3 in einem gewissen Abstand rechts neben der ersten Verschiebeführung 2 angeordneten Verschiebeführung 2) durch Ausübung einer Zugkraft auf die Kette 9 in den vordefinierten Abstand von der zweiten Verschiebeführung 2 entlang der Längsrichtung L der Tragwelle 1 verschiebbar. Die Ausübung der Zugkraft auf die Kette 9 erfolgt hier nach links entlang der Längsrichtung L der Tragwelle 1. Die zweite Verschiebeführung 2 ist wiederum im Zustand der Kupplung mit der von links ausgehend dritten Verschiebeführung 2 (in Fig. 3 rechts an der zweiten Verschiebeführung 2 anliegenden Verschiebeführung 2) durch Ausübung einer Zugkraft auf die Kette 9 in den vordefinierten Abstand von der dritten Verschiebeführung 2 entlang der Längsrichtung L der Tragwelle 1 verschiebbar. Entsprechendes gilt für die weiteren Verschiebeführungen 2 - bis auf die achte Verschiebeführung 2 (rechts außen).

Die erste Verschiebeführung 2 ist also von der mit ihr gekuppelten zweiten Verschiebeführung 2 und den anderen Verschiebeführungen 2 räumlich entfernbar, während die erste Verschiebeführung 2 an der Tragwelle 1 angeordnet ist. Dies kann so geschehen, dass die zweite Verschiebeführung 2 und/oder die weiteren Verschiebeführungen 2 nicht gleichzeitig verschoben werden.

Durch entsprechende Wiederholung können aneinander anliegende Verschiebeführungen 2 auf diese Weise vereinzelt werden.

In Fig. 3 ist zu erkennen, dass die erste Verschiebeführung 2 in einem gewissen Abstand von der zweiten Verschiebeführung 2 auf der Tragwelle 1 angeordnet ist. Dieser gewisse Abstand ist geringer als der vordefinierte Abstand.

Sind die erste und die zweite Verschiebeführung 2 vereinzelt, ist die erste Verschiebeführung 2 in dem vordefinierten Abstand zu der zweiten Verschiebeführung 2 durch Ausübung einer Zugkraft auf die Kette 9 (in Fig. 3 nach links) zusammen mit der zweiten Verschiebeführung entlang der Längsrichtung L der Tragwelle 1 in Richtung der Zugkraft verschiebbar aufgrund der Kupplung mittels der Kette 9.

Nicht dargestellt ist eine Ausführungsform, bei der die Verbindungseinrichtung eine weitere Kette als zweites Verbindungselement aufweist, wobei die weitere Kette an der Längsseite 10B jeder Verschiebeführung 2 mittels jeweils eines Fixierelements 8 fixiert ist.

Fig. 7 zeigt schematisch in einer perspektivischen Ansicht die hier wesentlichen Teile eines zweiten Ausführungsbeispiels einer erfindungsgemäßen Förderband-Abstreifvorrichtung für ein Förderband einer Förderbandanlage. Die Fig. 8 bis 10 zeigen weitere Ansichten dieser Förderband-Abstreifvorrichtung. Diese Förderband-Abstreifvorrichtung ist wie die Förderband-Abstreifvorrichtung gemäß dem ersten Ausführungsbeispiel ausgebildet - mit dem Unterschied, dass anders konstruierte Abstreifsegmente 4 vorgesehen sind, die Teil eines Sekundärabstreifers 24 sind.

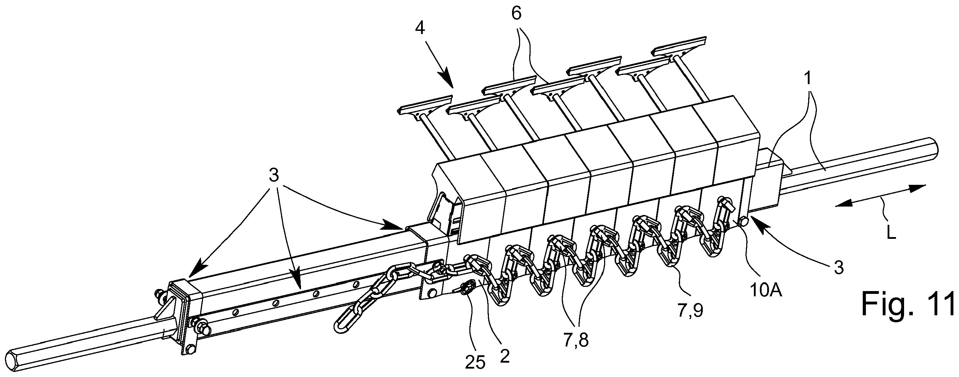

Fig. 11 zeigt schematisch in einer perspektivischen Ansicht die hier wesentlichen Teile eines dritten Ausführungsbeispiels einer erfindungsgemäßen Förderband-Abstreifvorrichtung für ein Förderband einer Förderbandanlage. Im Vergleich zu der Förderband-Abstreifvorrichtung gemäß dem zweiten Ausführungsbeispiel sind in Fig. 11 nur sieben statt acht Verschiebeführungen 2 gezeigt. Außerdem ist hier beispielhaft für alle Ausführungsbeispiele eine Befestigungseinrichtung 3 illustriert.

Die Befestigungseinrichtung 3 bildet für die Verschiebführungen 2 einen auf der Tragewelle 1 befindlichen linken Anschlag und einen auf der Tragewelle 1 befindlichen rechten Anschlag. Der in Fig. 11 rechte Anschlag wird bei der Montage der Förderband-Abstreifvorrichtung auf der Tragwelle 1 angeordnet und fixiert, sodass er in seiner Lage nicht mehr veränderlich ist. Der in Fig. 11 linke Anschlag ist lösbar an der Tragwelle 1 angeordnet. Im an der Tragwelle 1 befestigten Zustand blockiert die Befestigungseinrichtung 3 ein Verschieben der Verschiebeführungen 2 in Längsrichtung L der Tragwelle 1. Nach Lösen der Befestigungseinrichtung 3 ist der linke Anschlag entnehmbar, sodass die Verschiebeführungen 2 in Längsrichtung L der Tragwelle 1 verschiebbar sind.

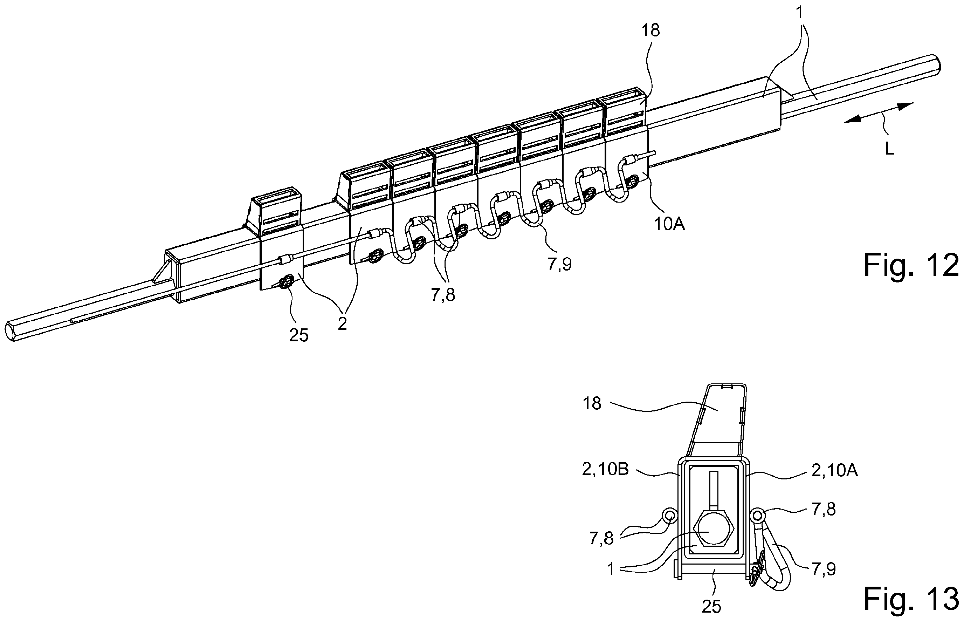

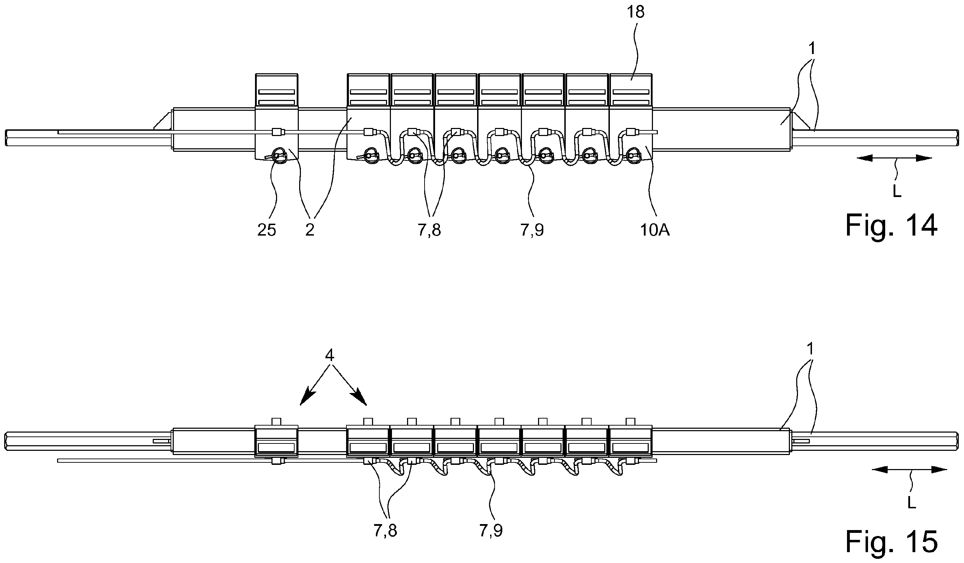

Fig. 12 zeigt schematisch in einer perspektivischen Ansicht die hier wesentlichen Teile eines vierten Ausführungsbeispiels einer erfindungsgemäßen Förderband-Abstreifvorrichtung für ein Förderband einer Förderbandanlage. Die Fig. 13 bis 15 zeigen weitere Ansichten dieser Förderband-Abstreifvorrichtung. Diese Förderband-Abstreifvorrichtung ist grundsätzlich wie die Förderband-Abstreifvorrichtung gemäß dem ersten Ausführungsbeispiel ausgebildet. Aus Gründen der Vereinfachung sind bei dem vierten Ausführungsbeispiel keine Abstreifsegmente 4 dargestellt.

Gezeigt sind Adapter 18 zur Anbringung des Halteendes 6 eines spezifischen Abstreifsegments 4. Bei entsprechender Gestaltung der Adapter 18 kann man beispielsweise auch ein Standard-Abstreifsegment 4 hier anbringen, wie es aus dem Stand der Technik bekannt ist.

Bei dem hier dargestellten und bevorzugten Ausführungsbeispiel handelt es sich bei dem genau einen Verbindungselement 9 der Verbindungseinrichtung 7 um ein Seil. Das Seil 9 ist an einer Längsseite 10A jeder Verschiebeführung 2 jeweils mittels eines Fixierelements 8 fixiert. Jedes Fixierelement ist hülsenartig ausgebildet.

Die Ausführungen zur Kette des ersten Ausführungsbeispiels gelten entsprechend zum Seil des vierten Ausführungsbeispiels.

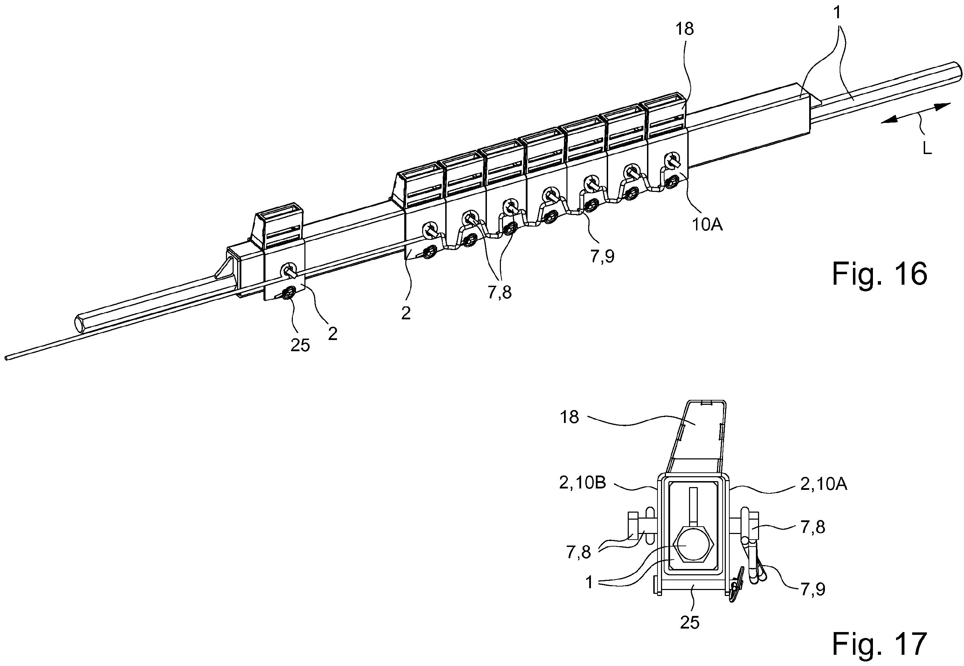

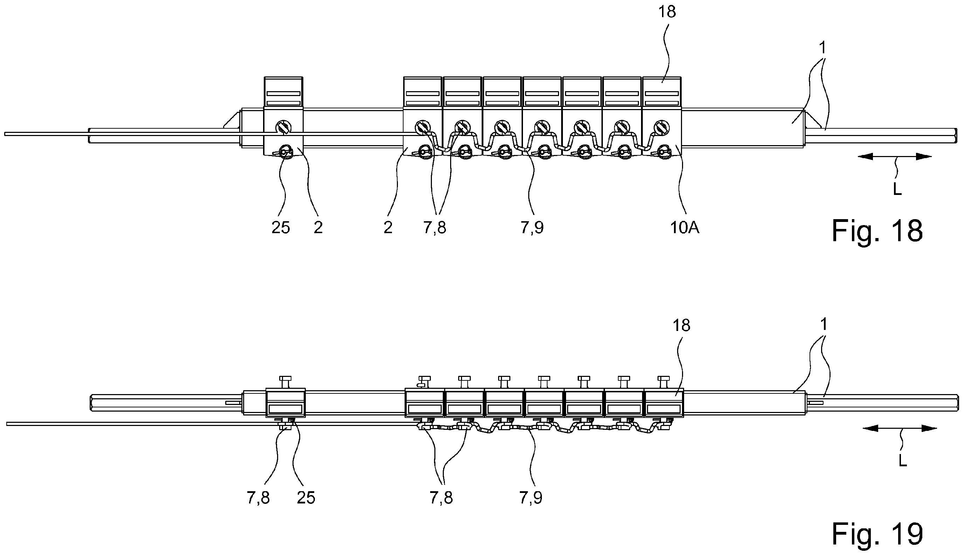

Fig. 16 zeigt schematisch in einer perspektivischen Ansicht die hier wesentlichen Teile eines fünften Ausführungsbeispiels einer erfindungsgemäßen Förderband-Abstreifvorrichtung für ein Förderband einer Förderbandanlage. Die Fig. 17 bis 19 zeigen weitere Ansichten dieser Förderband-Abstreifvorrichtung. Diese Förderband-Abstreifvorrichtung ist grundsätzlich wie die Förderband-Abstreifvorrichtung gemäß dem fünften Ausführungsbeispiel ausgebildet. Bei dem hier dargestellten und bevorzugten Ausführungsbeispiel ist das Verbindungselement 9 der Verbindungseinrichtung 7 wiederum ein Seil, das an einer Längsseite 10A jeder Verschiebeführung 2 jeweils mittels eines Fixierelements 8 fixiert ist. Jedes Fixierelement ist ein Verschlussbolzen.

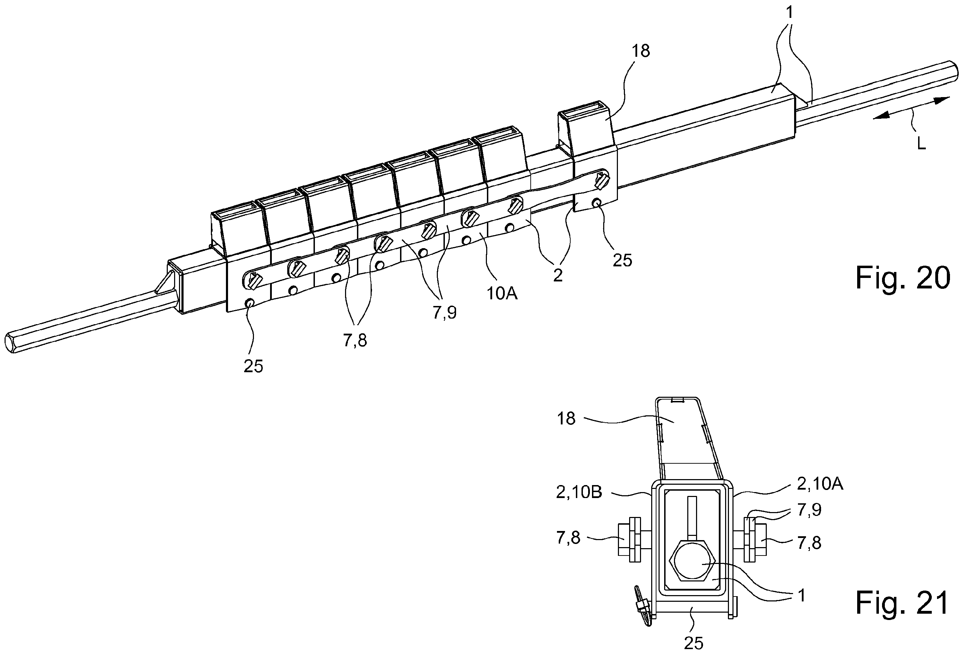

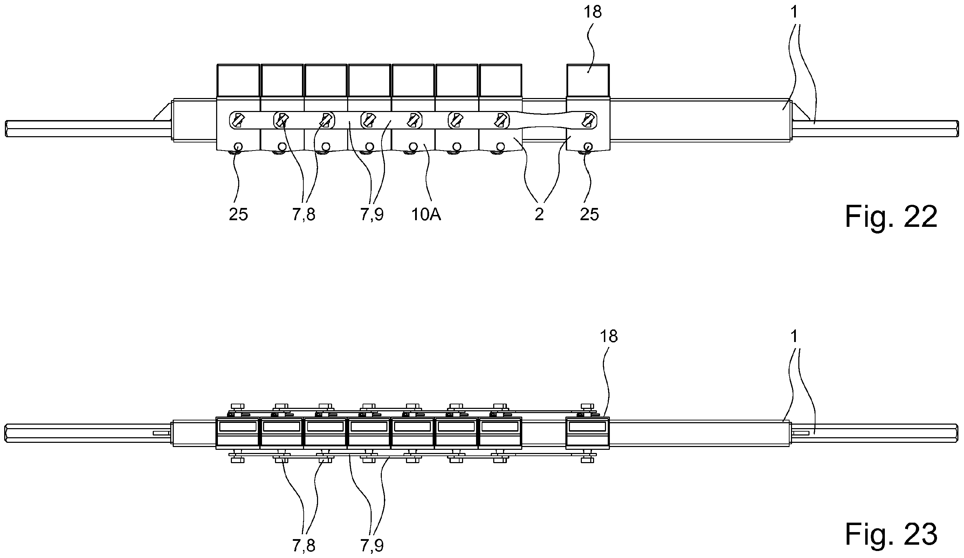

Fig. 20 zeigt schematisch in einer perspektivischen Ansicht die hier wesentlichen Teile eines sechsten Ausführungsbeispiels einer erfindungsgemäßen Förderband-Abstreifvorrichtung für ein Förderband einer Förderbandanlage. Die Fig. 21 bis 23 zeigen weitere Ansichten dieser Förderband-Abstreifvorrichtung. Diese Förderband-Abstreifvorrichtung ist grundsätzlich wie die Förderband-Abstreifvorrichtung gemäß dem vierten Ausführungsbeispiel ausgebildet.

Bei dem hier dargestellten und bevorzugten Ausführungsbeispiel hat die Verbindungseinrichtung 7 mehrere Verbindungselemente 9. Jedes Verbindungselement 9 erstreckt sich von einer Längsseite 10A einer Verschiebeführung 2 zu einer Längsseite 10A einer benachbarten Verschiebeführung 2 oder von der anderen Längsseite 10B einer Verschiebeführung 2 zur anderen Längsseite 10B einer benachbarten Verschiebeführung 2. Somit sind hier insgesamt 14 Verbindungselemente 9 vorgesehen.

Jedes Verbindungselement 9 ist an einer Längsseite 10A einer Verschiebeführung 2 und an einer Längsseite 10A einer benachbarten Verschiebeführung 2 mittels jeweils eines Fixierelements 8 fixiert oder an der anderen Längsseite 10B einer Verschiebeführung 2 und an der anderen Längsseite 10B einer benachbarten Verschiebeführung 2 mittels jeweils eines Fixierelements 8 fixiert.

Bei den Verbindungselementen 9 handelt es sich jeweils um ein elastisches Band.

Bei dem in Fig. 20 dargestellten und bevorzugten Ausführungsbeispiel ist die von rechts ausgehend erste Verschiebeführung 2 im Zustand der Kupplung mit der von rechts ausgehend zweiten Verschiebeführung 2 (in Fig. 20 in einem gewissen Abstand links neben der ersten Verschiebeführung 2 angeordneten Verschiebeführung 2) durch Ausübung einer Zugkraft auf die erste Verschiebeführung 2 in den vordefinierten Abstand von der zweiten Verschiebeführung 2 entlang der Längsrichtung L der Tragwelle 1 verschiebbar. Die Ausübung der Zugkraft auf die Verschiebeführung 2 erfolgt hier nach rechts entlang der Längsrichtung L der Tragwelle 1.

Die zweite Verschiebeführung 2 ist wiederum im Zustand der Kupplung mit der von rechts ausgehend dritten Verschiebeführung 2 (in Fig. 20 links an der zweiten Verschiebeführung 2 anliegenden Verschiebeführung 2) durch Ausübung einer Zugkraft auf die Verschiebeführung 2 in einen vordefinierten Abstand von der dritten Verschiebeführung 2 entlang der Längsrichtung L der Tragwelle 1 verschiebbar. Entsprechendes gilt für die weiteren Verschiebeführungen 2 - bis auf die achte Verschiebeführung 2 (links außen).

Der jeweilige vordefinierte Abstand hängt von dem Elastizitätsmodul des jeweiligen elastischen Bands 9 ab.

Vorzugsweise weisen die elastischen Bänder 9 ein Elastizitätsmodul von ca. 15 MPa (gemäß ISO 527) und/oder eine Zugfestigkeit von ca. 45 MPa (gemäß ISO 527) auf.

Sind die erste und die zweite Verschiebeführung 2 vereinzelt, ist die erste Verschiebeführung 2 in dem vordefinierten Abstand zu der zweiten Verschiebeführung 2 durch Ausübung einer Zugkraft auf die Verschiebeführung 2 (in Fig. 20 nach rechts) zusammen mit der zweiten Verschiebeführung entlang der Längsrichtung L der Tragwelle 1 in Richtung der Zugkraft verschiebbar aufgrund der Kupplung mittels des elastischen Bands 9.

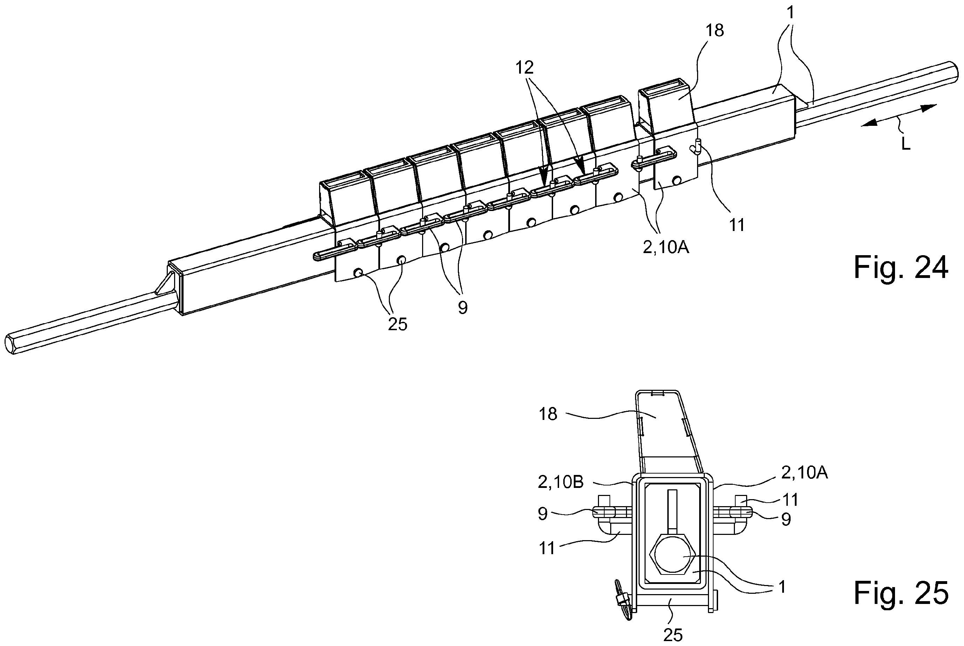

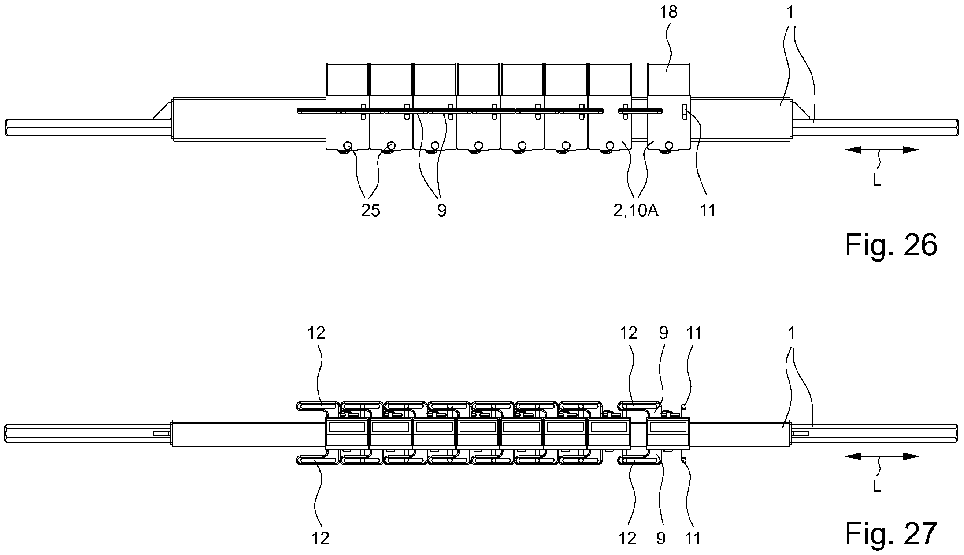

Fig. 24 zeigt schematisch in einer perspektivischen Ansicht die hier wesentlichen Teile eines siebten Ausführungsbeispiels einer erfindungsgemäßen Förderband-Abstreifvorrichtung für ein Förderband einer Förderbandanlage. Die Fig. 25 bis 27 zeigen weitere Ansichten dieser Förderband-Abstreifvorrichtung. Diese Förderband-Abstreifvorrichtung ist grundsätzlich wie die Förderband-Abstreifvorrichtung gemäß dem vierten Ausführungsbeispiel ausgebildet.

Bei dem hier dargestellten und bevorzugten Ausführungsbeispiel hat die Verbindungseinrichtung 7 an jeder Verschiebeführung 2 zwei Bolzen 11 und zwei Verbindungselemente 9. An der Längsseite 10A der jeweiligen Verschiebeführung 2 sind ein Verbindungselement 9 und ein Bolzen 11 angebracht. An der anderen Längsseite 10B der jeweiligen Verschiebeführung 2 sind ein weiteres Verbindungselement 9 und ein weiterer Bolzen 11 angebracht.

Jedes Verbindungselement 9 weist eine Aussparung 12 auf.

Im Folgenden wird das siebte Ausführungsbeispiel anhand der Konstruktion auf den einen Längsseiten 10A der Verschiebeführungen 2 erläutert. Für die Konstruktion auf den anderen Längsseiten 10B der Verschiebeführungen 2 gilt Entsprechendes.

Im gekuppelten Zustand zweier Verschiebeführungen 2 erstrecken sich die beiden Verbindungselemente 9 der einen Verschiebeführung 2 von der einen Längsseite 10A der einen Verschiebeführung 2 zur anderen Verschiebeführung 2. Die Aussparung 12 des Verbindungselements 9 auf der Längsseite 10A der einen Verschiebeführung 2 nimmt in dem gekuppelten Zustand den Bolzen 11 auf der Längsseite 10A der anderen Verschiebeführung 2 derart auf, dass der Bolzen 11 auf der Längsseite 10A der anderen Verschiebeführung 2 in der Aussparung 12 des Verbindungselements 9 auf der Längsseite 10A der einen Verschiebeführung 2 entlang der Längsrichtung L der Tragwelle 1 um den vordefinierten Abstand verschiebbar ist, sodass die eine Verschiebeführung 2 durch Ausübung einer Zugkraft auf die eine Verschiebeführung 2 in den vordefinierten Abstand von der anderen Verschiebeführung 2 entlang der Längsrichtung L der Tragwelle 1 verschiebbar ist.

Die Aussparung 12 des Verbindungselements 9 auf der Längsseite 10A der einen Verschiebeführung 2 bildet für den Bolzen 11 auf der Längsseite 10A der anderen Verschiebeführung 2 einen Anschlag. Schlägt der Bolzen 11 der anderen Verschiebeführung 2 an der Aussparung 12 der einen Verschiebeführung 2 an, so wird ein Teil einer auf die eine Verschiebeführung 2 ausgeübten Zugkraft auf die andere Verschiebeführung 2 übertragen. So kann die andere Verschiebeführung 2 in den vordefinierten Abstand von einer weiteren mit der anderen Verschiebeführung 2 gekuppelten Verschiebeführung 2 entlang der Längsrichtung L der Tragwelle 1 verschoben werden. Auf diese Weise können die Verschiebeführungen 2 vereinzelt werden.

Sind die beiden anfangs betrachteten gekuppelten Verschiebeführungen 2 vereinzelt, können sie zusammen in dem vordefinierten Abstand zueinander entlang der Längsrichtung L der Tragwelle 1 verschoben werden, und zwar durch Ausübung einer Zugkraft auf die eine Verschiebeführung 2.

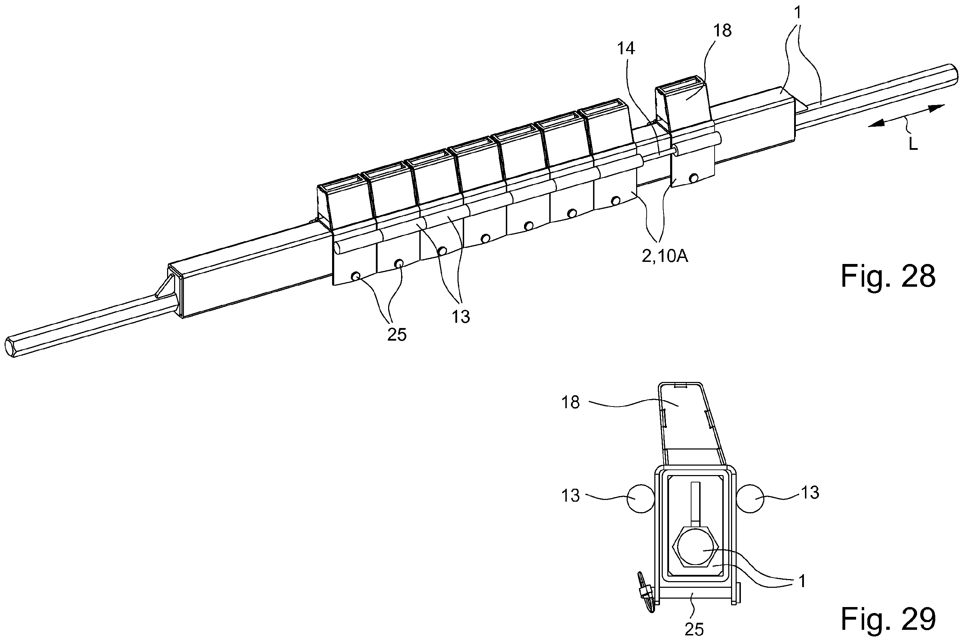

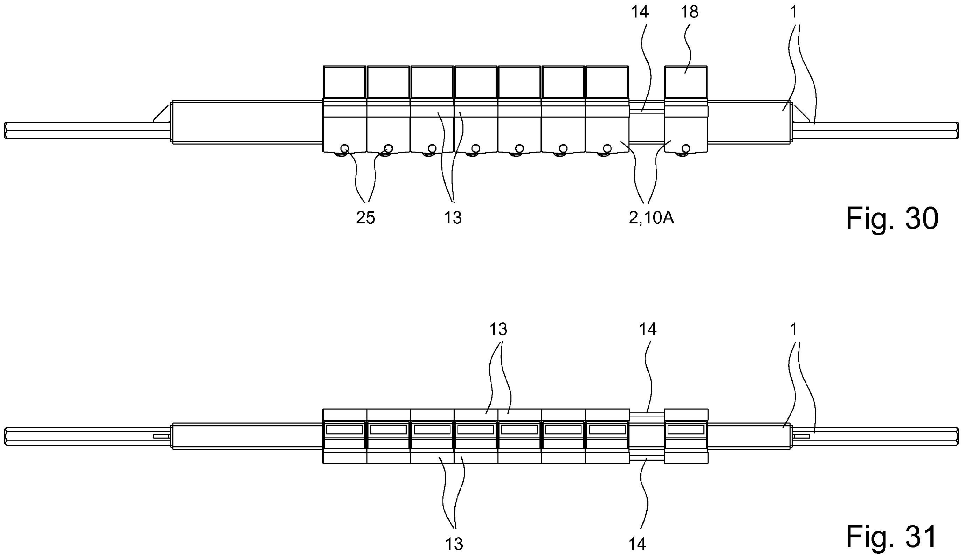

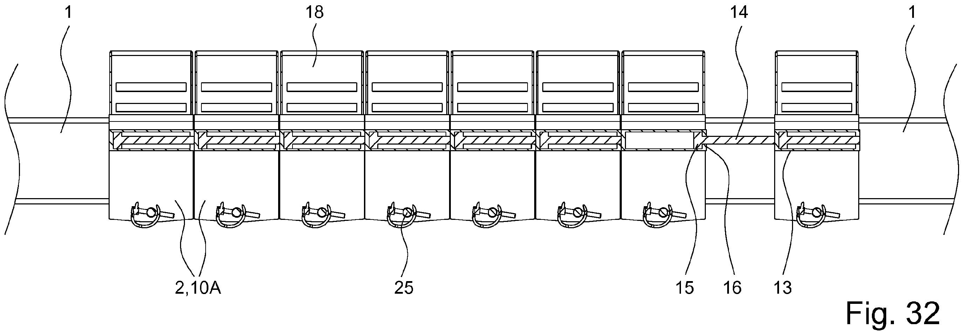

Fig. 28 zeigt schematisch in einer perspektivischen Ansicht die hier wesentlichen Teile eines achten Ausführungsbeispiels einer erfindungsgemäßen Förderband-Abstreifvorrichtung für ein Förderband einer Förderbandanlage. Die Fig. 29 bis 32 zeigen weitere Ansichten dieser Förderband-Abstreifvorrichtung. Diese Förderband-Abstreifvorrichtung ist grundsätzlich wie die Förderband-Abstreifvorrichtung gemäß dem vierten Ausführungsbeispiel ausgebildet.

Bei dem hier dargestellten und bevorzugten Ausführungsbeispiel hat die Verbindungseinrichtung 7 an jeder Verschiebeführung 2 zwei Hohlzylinder 13. Der eine Hohlzylinder 13 ist an der einen Längsseite 10A der jeweiligen Verschiebeführung 2 angebracht. Der andere Hohlzylinder 13 ist an der anderen Längsseite 10B der jeweiligen Verschiebeführung 2 angebracht. In jedem der beiden Hohlzylinder 13 ist ein Kolben 14 angeordnet.

Jeder Hohlzylinder 13 hat einen Begrenzer 16 und jeder Kolben 14 hat einen Anschlag 15. Bei dem hier dargestellten und bevorzugten Ausführungsbeispiel ist der Begrenzer 16 durch eine Verengung des Hohlzylinders 13 an einem seiner Enden und der Anschlag 15 durch eine Verbreiterung des Kolbens 14 an einem seiner Enden gebildet.

Im Folgenden wird das achte Ausführungsbeispiel anhand der Konstruktion auf den einen Längsseiten 10A der Verschiebeführungen 2 erläutert. Für die Konstruktion auf den anderen Längsseiten 10B der Verschiebeführungen 2 gilt Entsprechendes.

Im gekuppelten Zustand zweier Verschiebeführungen 2 ist der Kolben 14 auf der einen Längsseite 10A der einen Verschiebeführung 2 relativ zu dem Hohlzylinder 14 auf der einen Längsseite 10A der einen Verschiebeführung 2 beweglich und mit dem Hohlzylinder 13 auf der einen Längsseite 10A der anderen Verschiebeführung 2 derart gekuppelt, dass die andere Verschiebeführung 2 durch Ausübung einer Zugkraft auf die andere Verschiebeführung 2 von der einen Verschiebeführung 2 entlang der Längsrichtung L der Tragwelle 1 wegschiebbar ist, bis der Anschlag 15 des Kolbens 14 auf der einen Längsseite 10A der einen Verschiebeführung 2 an dem Begrenzer 16 des Hohlzylinders 13 auf der einen Längsseite 10A der einen Verschiebeführung 2 anliegt, sodass die andere Verschiebeführung 2 durch Ausübung einer Zugkraft auf die andere Verschiebeführung 2 in den vordefinierten Abstand von der einen Verschiebeführung 2 entlang der Längsrichtung L der Tragwelle 1 verschiebbar ist.

Beispielsweise kann der Kolben 14 auf der einen Längsseite 10A der einen Verschiebeführung 2 mit dem Hohlzylinder 13 auf der einen Längsseite 10A der anderen Verschiebeführung 2 zur Kupplung lösbar verbunden sein. Besonders bevorzugt ist hier eine Steckverbindung. Dazu kann der Kolben 14 auf der einen Längsseite 10A der einen Verschiebeführung 2 in den Hohlzylinder 13 auf der einen Längsseite 10A der anderen Verschiebeführung 2 hineinragen und durch ein steckbares Sicherungselement wie ein Federsplint arretiert sein.

Liegt der Anschlag 15 des Kolbens 14 auf der einen Längsseite 10A der einen Verschiebeführung 2 an dem Begrenzer 16 des Hohlzylinders 13 auf der einen Längsseite 10A der einen Verschiebeführung 2 an, so wird ein Teil einer auf die andere Verschiebeführung 2 ausgeübten Zugkraft auf die eine Verschiebeführung 2 übertragen. So kann die eine Verschiebeführung 2 in den vordefinierten Abstand von einer weiteren mit der einen Verschiebeführung 2 gekuppelten Verschiebeführung 2 entlang der Längsrichtung L der Tragwelle 1 verschoben werden. Auf diese Weise können die Verschiebeführungen 2 vereinzelt werden.

Sind die beiden anfangs betrachteten gekuppelten Verschiebeführung 2 vereinzelt, können sie zusammen in dem vordefinierten Abstand zueinander entlang der Längsrichtung L der Tragwelle 1 verschoben werden, während der Anschlag 15 des Kolbens 14 auf der einen Längsseite 10A der einen Verschiebeführung 2 an dem Begrenzer 16 des Hohlzylinders 13 auf der einen Längsseite 10A der einen Verschiebeführung 2 anliegt, und zwar durch Ausübung einer Zugkraft auf die andere Verschiebeführung 2.

Bei dem hier dargestellten und bevorzugten Ausführungsbeispiel erstreckt sich jeder Hohlzylinder 13 über die gesamte in Längsrichtung der Tragwelle 1 verlaufende Länge der einen Längsseite 10A der zugehörigen Verschiebeführung 2. Die Erstreckung jedes Kolbens 14 in Längsrichtung der Tragwelle 1 ist länger als der vordefinierte Abstand.

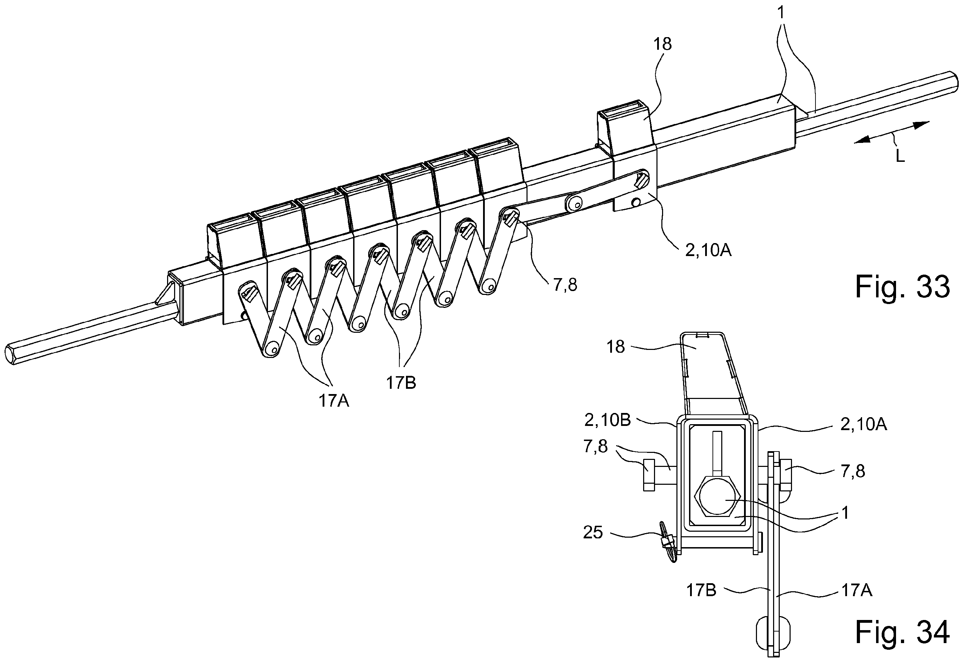

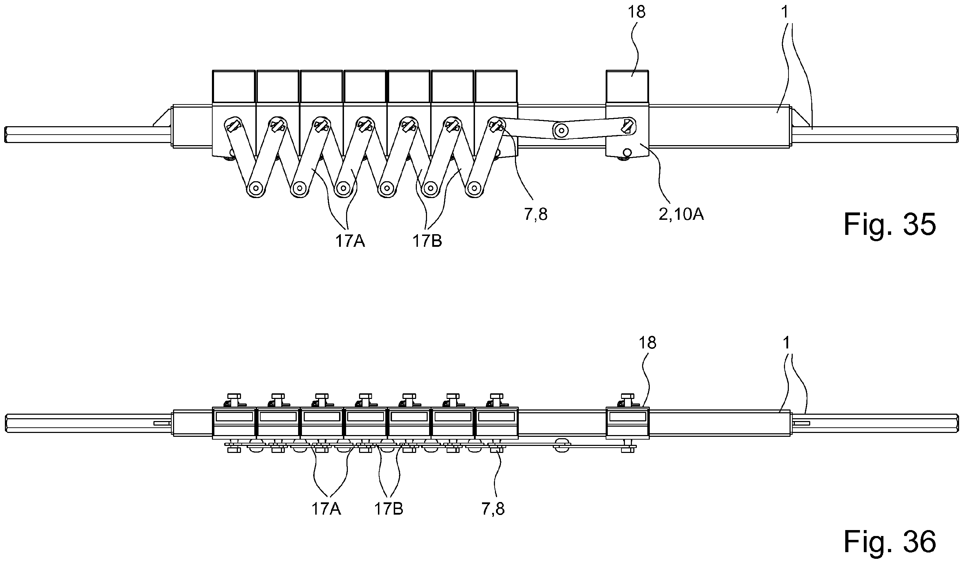

Fig. 33 zeigt schematisch in einer perspektivischen Ansicht die hier wesentlichen Teile eines neunten Ausführungsbeispiels einer erfindungsgemäßen Förderband-Abstreifvorrichtung für ein Förderband einer Förderbandanlage. Die Fig. 34 bis 36 zeigen weitere Ansichten dieser Förderband-Abstreifvorrichtung. Diese Förderband-Abstreifvorrichtung ist grundsätzlich wie die Förderband-Abstreifvorrichtung gemäß dem vierten Ausführungsbeispiel ausgebildet.

Bei dem hier dargestellten und bevorzugten Ausführungsbeispiel hat die Verbindungseinrichtung 7 zur Kupplung jeweils zweier benachbarter Verschiebeführungen 2 zwei gelenkig miteinander verbundene Verbindungsplatten 17A, 17B. Die eine Verbindungsplatte 17A ist mittels eines Fixierelements 8 drehbar an einer Längsseite 10A der einen Verschiebeführung 2 und die andere Verbindungsplatte 17B ist mittels eines weiteren Fixierelements 8 drehbar an einer Längsseite 10A der anderen Verschiebeführung 2 fixiert.

Die maximale Erstreckung zweier miteinander verbundener Verbindungsplatten 17A, 17B ist größer als der (von dieser maximalen Erstreckung abhängige) vordefinierte Abstand und größer als der Abstand zwischen den Fixierelementen 8 dieser beiden Verschiebeführungen 2, wenn diese beiden Verschiebeführungen 2 aneinander anliegen.

Bei dem in Fig. 33 dargestellten und bevorzugten Ausführungsbeispiel ist die von rechts ausgehend erste Verschiebeführung 2 im Zustand der Kupplung mit der von rechts ausgehend zweiten Verschiebeführung 2 (in Fig. 33 in einem gewissen Abstand links neben der ersten Verschiebeführung 2 angeordneten Verschiebeführung 2) durch Ausübung einer Zugkraft auf die erste Verschiebeführung 2 in den vordefinierten Abstand von der zweiten Verschiebeführung 2 entlang der Längsrichtung L der Tragwelle 1 verschiebbar. Die Ausübung der Zugkraft auf die Verschiebeführung 2 erfolgt hier nach rechts entlang der Längsrichtung L der Tragwelle 1. Die zweite Verschiebeführung 2 ist wiederum im Zustand der Kupplung mit der von rechts ausgehend dritten Verschiebeführung 2 (in Fig. 33 links an der zweiten Verschiebeführung 2 anliegenden Verschiebeführung 2) durch Ausübung einer Zugkraft auf die zweite Verschiebeführung 2 in den vordefinierten Abstand von der dritten Verschiebeführung 2 entlang der Längsrichtung L der Tragwelle 1 verschiebbar. Entsprechendes gilt für die weiteren Verschiebeführungen 2 - bis auf die achte Verschiebeführung 2 (links außen).

Die erste Verschiebeführung 2 ist also von der mit ihr gekuppelten zweiten Verschiebeführung 2 und den anderen Verschiebeführungen 2 räumlich entfernbar, während die erste Verschiebeführung 2 an der Tragwelle 1 angeordnet ist. Dies kann so geschehen, dass die zweite Verschiebeführung 2 und/oder die weiteren Verschiebeführungen 2 nicht gleichzeitig verschoben werden.

Durch entsprechende Wiederholung können aneinander anliegende Verschiebeführungen 2 auf diese Weise vereinzelt werden.

In Fig. 33 ist zu erkennen, dass die erste Verschiebeführung 2 in einem gewissen Abstand von der zweiten Verschiebeführung 2 auf der Tragwelle 1 angeordnet ist. Dieser gewisse Abstand ist geringer als der vordefinierte Abstand. Die an der ersten Verschiebeführung 2 angebrachte Verbindungsplatte 17A und die mit dieser Verbindungsplatte 17A verbundene, an der zweiten Verschiebeführung 2 angebrachte Verbindungsplatte 17B haben ihre gemeinsame maximale Erstreckung in Fig. 33 nicht erreicht.

Sind die erste und die zweite Verschiebeführung 2 vereinzelt, ist die erste Verschiebeführung 2 in dem vordefinierten Abstand zu der zweiten Verschiebeführung 2 durch Ausübung einer Zugkraft auf die zweite Verschiebeführung 2 (in Fig. 33 nach rechts) zusammen mit der zweiten Verschiebeführung entlang der Längsrichtung L der Tragwelle 1 in Richtung der Zugkraft verschiebbar aufgrund der Kupplung mittels der Verbindungsplatten 17A, 17B.

Nicht dargestellt ist eine Ausführungsform, bei der die Verbindungseinrichtung zur Kupplung jeweils zweier benachbarter Verschiebeführungen 2 zwei weitere gelenkig miteinander verbundene Verbindungsplatten hat, wobei die eine Verbindungsplatte drehbar an der anderen Längsseite 10B der einen Verschiebeführung 2 und die andere Verbindungsplatte drehbar an der anderen Längsseite 10B der anderen Verschiebeführung 2 fixiert ist.

In den Fig. 3 bis 36 sind die Verschiebeführungen 2 als einseitig offenes Hohlprofil ausgeführt.

Die Fig. 3 bis 36 zeigen im Übrigen die Verschiebeführungen 2 mit einem Befestigungsmittel 25, insbesondere einem Verschlussbolzen, durch das die jeweilige Verschiebeführung 2 mit dem daran angebrachten Abstreifsegment 4 sicher (aber in Längsrichtung L der Tragwelle 1 verschiebbar) auf der Tragwelle 1 arretiert ist.

### Bezugszeichenliste:

- 1: Tragwelle
- 2: Verschiebeführung
- 3: Befestigungseinrichtung
- 4: Abstreifsegment
- 5: Halteende von 4
- 6: Abstreifende von 4
- 7: Verbindungseinrichtung
- 8: Fixierelement von 7
- 9: Verbindungselement von 7
- 10A, 10B: Längsseite von 2
- 11: Bolzen von 7
- 12: Aussparung von 9
- 13: Hohlzylinder von 7
- 14: Kolben von 7
- 15: Anschlag von 14
- 16: Begrenzer von 13
- 17A, 17B: Verbindungsplatte von 7
- 18: Adapter
- 19: Förderband
- 20: Schüttgut
- 21: Umlenkwalze
- 22: Halterung für 1
- 23: Primärabstreifer
- 24: Sekundärabstreifer
- 25: Befestigungsmittel von 2

- L: Längsrichtung von 1

## Patentansprüche

1. Förderband-Abstreifvorrichtung für ein Förderband einer Förderbandanlage, mit einer Tragwelle (1) und mindestens zwei nebeneinander an der Tragwelle (1) formschlüssig Drehmoment übertragend angeordneten Verschiebeführungen (2), wobei jede der beiden Verschiebeführungen (2)
- nach Lösen einer Befestigungseinrichtung (3) der Förderband-Abstreifvorrichtung in Längsrichtung (L) der Tragwelle (1) verschiebbar ist und
- mit einem Halteende (5) eines Abstreifsegments (4) der Förderband-Abstreifvorrichtung verbunden ist, wobei das Abstreifsegment (4) ein vom Halteende (5) beabstandetes, an dem Förderband zur Anlage bringbares Abstreifende (6) aufweist,
**dadurch gekennzeichnet,**
**dass** die beiden Verschiebeführungen (2) mittels einer Verbindungseinrichtung (7) der Förderband-Abstreifvorrichtung miteinander in Längsrichtung (L) der Tragwelle (1) wirksam kuppelbar sind,
**dass** eine der beiden Verschiebeführungen (2) im Zustand der Kupplung mit der anderen Verschiebeführung (2) in einen vordefinierten Abstand von der anderen Verschiebeführung (2) entlang der Längsrichtung (L) der Tragwelle (1) verschiebbar und dann in dem vordefinierten Abstand zu der anderen Verschiebeführung (2) zusammen mit der anderen Verschiebeführung (2) entlang der Längsrichtung (L) der Tragwelle (1) verschiebbar ist aufgrund der Kupplung mittels der Verbindungseinrichtung (7).

2. Förderband-Abstreifvorrichtung nach Anspruch 1, **dadurch gekennzeichnet, dass** eine der beiden Verschiebeführungen (2) im Zustand der Kupplung mit der anderen Verschiebeführung (2) mittels der Verbindungseinrichtung (7) in den vordefinierten Abstand von der anderen Verschiebeführung (2) entlang der Längsrichtung (L) der Tragwelle (1) verschiebbar und dann mittels der Verbindungseinrichtung (7) in dem vordefinierten Abstand zu der anderen Verschiebeführung (2) zusammen mit der anderen Verschiebeführung (2) entlang der Längsrichtung (L) der Tragwelle (1) verschiebbar ist aufgrund der Kupplung mittels der Verbindungseinrichtung (7).

3. Förderband-Abstreifvorrichtung nach Anspruch 1 oder 2, **dadurch gekennzeichnet, dass** eine der beiden Verschiebeführungen (2) im Zustand der Kupplung mit der anderen Verschiebeführung (2) durch Ausübung einer Zugkraft auf die eine Verschiebeführung (2) in den vordefinierten Abstand von der anderen Verschiebeführung (2) entlang der Längsrichtung (L) der Tragwelle (1) verschiebbar und dann durch Ausübung einer Zugkraft auf die eine Verschiebeführung (2) mittels der Verbindungseinrichtung (7) in dem vordefinierten Abstand zu der anderen Verschiebeführung (2) zusammen mit der anderen Verschiebeführung (2) entlang der Längsrichtung (L) der Tragwelle (1) in Richtung der Zugkraft verschiebbar ist aufgrund der Kupplung mittels der Verbindungseinrichtung (7).

4. Förderband-Abstreifvorrichtung nach einem der voranstehenden Ansprüche, **dadurch gekennzeichnet, dass** die Verbindungseinrichtung (7) an beiden Verschiebeführungen (2) fixiert ist, vorzugsweise mittels eines Fixierelements (8) der Verbindungseinrichtung (7).

5. Förderband-Abstreifvorrichtung nach einem der voranstehenden Ansprüche, **dadurch gekennzeichnet, dass** die Verbindungseinrichtung (7) ein Verbindungselement (9) hat, das sich von der einen Verschiebeführung (2) zur anderen Verschiebeführung (2) erstreckt.

6. Förderband-Abstreifvorrichtung nach einem der voranstehenden Ansprüche, **dadurch gekennzeichnet, dass** die Verbindungseinrichtung (7) genau ein Verbindungselement (9) hat, das sich über alle Verschiebeführungen (2) erstreckt.

7. Förderband-Abstreifvorrichtung nach einem der voranstehenden Ansprüche, **dadurch gekennzeichnet, dass** jede der beiden Verschiebeführungen (2) Längsseiten (10A, 10B) aufweist, die im an der Tragwelle (1) angebrachten Zustand entlang der Längsrichtung (L) der Tragwelle (1) verlaufen und dass an mindestens einer Längsseite (10) jeder der beiden Verschiebeführungen (2) die Verbindungseinrichtung (7) fixiert ist.

8. Förderband-Abstreifvorrichtung nach einem der voranstehenden Ansprüche, **dadurch gekennzeichnet, dass** die Verbindungseinrichtung (7) zwei Verbindungselemente (9) aufweist,
dass sich das eine Verbindungselement (9) von einer Längsseite (10A) der einen Verschiebeführung (2) zur einen Längsseite (10A) der anderen Verschiebeführung (2) erstreckt und
dass sich das andere Verbindungselement (9) von der anderen Längsseite (10B) der einen Verschiebeführung (2) zur anderen Längsseite (10B) der anderen Verschiebeführung (2) erstreckt.

9. Förderband-Abstreifvorrichtung nach Anspruch 4 und 5 und, optional, einem der Ansprüche 6, 7 und 8, **dadurch gekennzeichnet, dass** das Verbindungselement (9) bzw. beide Verbindungselemente (9) jeweils eine Kette oder ein Seil ist/sind und die Länge der Kette oder des Seils zwischen den Fixierelementen (8) der beiden Verschiebeführungen (2) größer ist als der Abstand zwischen den Fixierelementen (8) der beiden Verschiebeführungen (2), wenn die beiden Verschiebeführungen (2) aneinander anliegen.

10. Förderband-Abstreifvorrichtung nach Anspruch 5 und, optional, einem der Ansprüche 7 bis 8, **dadurch gekennzeichnet, dass** das Verbindungselement (9) bzw. beide Verbindungselemente (9) jeweils ein elastisches Band ist/sind.

11. Förderband-Abstreifvorrichtung nach einem der Ansprüche 1 bis 5, 7 und 8, **dadurch gekennzeichnet, dass** die Verbindungseinrichtung (7) an jeder der beiden Verschiebeführungen (2) einen Bolzen (11) und ein Verbindungselement (9) hat, das sich von der einen Verschiebeführung (2) zur anderen Verschiebeführung (2) erstreckt, wenn die beiden Verschiebeführungen aneinander anliegen,
dass jedes Verbindungselement (9) eine Aussparung (12) aufweist,
dass die Aussparung (12) des Verbindungselements (9) der einen Verschiebeführung (2) im Zustand der Kupplung mit der anderen Verschiebeführung (2)
- den Bolzen (11) der anderen Verschiebeführung (2) derart aufnimmt, dass der Bolzen (11) der anderen Verschiebeführung (2) in der Aussparung (12) des Verbindungselements (9) der einen Verschiebeführung (2) entlang der Längsrichtung (L) der Tragwelle (1) um den vordefinierten Abstand verschiebbar ist und
- für den Bolzen (11) der anderen Verschiebeführung (2) einen Anschlag bildet, sodass beide Verschiebeführungen (2) zusammen in dem vordefinierten Abstand zueinander entlang der Längsrichtung (L) der Tragwelle (1) verschiebbar sind.

12. Förderband-Abstreifvorrichtung nach einem der Ansprüche 1 bis 5, 7 und 8, **dadurch gekennzeichnet, dass** die Verbindungseinrichtung (7) einen Hohlzylinder (13) an jeder der beiden Verschiebeführungen (2) und einen darin angeordneten Kolben (14) hat,
dass der Kolben (14) der einen Verschiebeführung (2) relativ zu dem Hohlzylinder (13) der einen Verschiebeführung (2) beweglich ist,
der Kolben (14) der einen Verschiebeführung (2) mit dem Hohlzylinder (13) der anderen Verschiebeführung (2) derart gekuppelt ist, dass
- die eine Verschiebeführung (2) von der anderen Verschiebeführung (2) entlang der Längsrichtung (L) der Tragwelle (1) wegschiebbar ist, bis ein Anschlag (15) des Kolbens (14) der einen Verschiebeführung (2) an einem Begrenzer (16) des Hohlzylinders (13) der einen Verschiebeführung (2) anliegt und
- beide Verschiebeführungen (2) zusammen in dem vordefinierten Abstand zueinander entlang der Längsrichtung (L) der Tragwelle (1) verschiebbar sind, während der Anschlag (15) des Kolbens (14) der einen Verschiebeführung (2) an dem Begrenzer (16) des Hohlzylinders (13) der einen Verschiebeführung (2) anliegt.

13. Förderband-Abstreifvorrichtung nach Anspruch 12, **dadurch gekennzeichnet, dass** sich jeder Hohlzylinder (13) über die gesamte in Längsrichtung (L) der Tragwelle (1) verlaufende Länge einer der Längsseiten (10A, 10B) der zugehörigen Verschiebeführung (2) erstreckt und dass die Erstreckung jedes Kolbens (14) in Längsrichtung (L) der Tragwelle (1) länger ist als der vordefinierte Abstand.

14. Förderband-Abstreifvorrichtung nach einem der Ansprüche 1 bis 4 und 7, **dadurch gekennzeichnet, dass** die Verbindungseinrichtung (7) für die beiden Verschiebeführungen (2) zwei gelenkig miteinander verbundene Verbindungsplatten (17A, 17B) aufweist,
dass die eine Verbindungsplatte (17A) drehbar an der einen Verschiebeführung (2) und die andere Verbindungsplatte (17B) drehbar an der anderen Verschiebeführung (2) fixiert ist.

## Claims

1. Conveyor belt stripping device for a conveyor belt of a conveyor system, having a support shaft (1) and at least two displacement guides (2) which are arranged side by side on the support shaft (1) in a positive locking manner so as to transmit torque, wherein each of the two displacement guides (2)
- is displaceable in a longitudinal direction (L) of the support shaft (1) once a fastening device (3) of conveyor belt stripping device has been released and
- is connected to a holding end (5) of a stripping segment (4) of the conveyor belt stripping device, wherein the stripping segment (4) comprises a stripping end (6) which is spaced from the holding end (5) and is movable to abut the conveyor belt,
**characterized in that**
the two displacement guides (2) are operatively couplable together in the longitudinal direction (L) of the support shaft (1) by means of a connection device (7) of the conveyor belt stripping device,
one of the two displacement guides (2), in the state coupled with the other displacement guide (2), is displaceable along the longitudinal direction (L) of the support shaft (1) to a predefined distance from the other displacement guide (2) and then is displaceable along the longitudinal direction (L) of the support shaft (1) at the predefined distance to the other displacement guide (2) together with the other displacement guide (2) on account of the coupling by means of the connection device (7).

2. Conveyor belt stripping device according to Claim 1, **characterized in that** one of the two displacement guides (2), in the state coupled with the other displacement guide (2), is displaceable by means of the connection device (7) along the longitudinal direction (L) of the support shaft (1) to the predefined distance from the other displacement guide (2) and then is displaceable by means of the connection device (7) along the longitudinal direction (L) of the support shaft (1) at the predefined distance to the other displacement guide (2) together with the other displacement guide (2) on account of the coupling by means of the connection device (7).

3. Conveyor belt stripping device according to Claim 1 or 2, **characterized in that** one of the two displacement guides (2), in the state coupled with the other displacement guide (2), is displaceable by exertion of a tensile force on the one displacement guide (2) along the longitudinal direction (L) of the support shaft (1) to the predefined distance from the other displacement guide (2) and then is displaceable by exertion of a tensile force on the one displacement guide (2) by means of the connection device (7) along the longitudinal direction (L) of the support shaft (1) at the predefined distance to the other displacement guide (2) together with the other displacement guide (2) in the direction of the tensile force on account of the coupling by means of the connection device (7).

4. Conveyor belt stripping device according to one of the preceding claims, **characterized in that** the connection device (7) is fixed to both displacement guides (2), preferably by means of a fixing element (8) of the connection device (7).

5. Conveyor belt stripping device according to one of the preceding claims, **characterized in that** the connection device (7) has a connection element (9) which extends from the one displacement guide (2) to the other displacement guide (2).

6. Conveyor belt stripping device according to one of the preceding claims, **characterized in that** the connection device (7) has precisely one connection element (9) which extends over all displacement guides (2).

7. Conveyor belt stripping device according to one of the preceding claims, **characterized in that** each of the two displacement guides (2) comprises longitudinal sides (10A, 10B) which, in the state attached to the support shaft (1), extend along the longitudinal direction (L) of the support shaft (1) and **in that** the connection device (7) is fixed to at least one longitudinal side (10) of each of the two displacement guides (2).

8. Conveyor belt stripping device according to one of the preceding claims, **characterized in that** the connection device (7) comprises two connection elements (9),
**in that** the one connection element (9) extends from a longitudinal side (10A) of the one displacement guide (2) to a longitudinal side (10A) of the other displacement guide (2) and
**in that** the other connection element (9) extends from the other longitudinal side (1 0B) of the one displacement guide (2) to the other longitudinal side (1 0B) of the other displacement guide (2).

9. Conveyor belt stripping device according to Claim 4 and 5 and, as an option, according to one of Claims 6, 7 and 8, **characterized in that** the connection element (9) or both connection elements (9) is/are in each case a chain or a cable and the length of the chain or of the cable between the fixing elements (8) of the two displacement guides (2) is greater than the distance between the fixing elements (8) of the two displacement guides (2) when the two displacement guides (2) abut against one another.

10. Conveyor belt stripping device according to Claim 5 and, as an option, according to one of Claims 7 to 8, **characterized in that** the connection element (9) or both connection elements (9) is/are in each case an elastic belt.

11. Conveyor belt stripping device according to one of Claims 1 to 5, 7 and 8, **characterized in that** the connection device (7) has on each of the two displacement guides (2) a bolt (11) and a connection element (9) which extends from the one displacement guide (2) to the other displacement guide (2) when the two displacement guides abut against one another,
**in that** each connection element (9) comprises a recess (12),
**in that** the recess (12) of the connection element (9) of the one displacement guide (2), in the state coupled with the other displacement guide (2),
- receives the bolt (11) of the other displacement guide (2) in such a manner that the bolt (11) of the other displacement guide (2) is displaceable in the recess (12) of the connection element (9) of the one displacement guide (2) along the longitudinal direction (L) of the support shaft (1) by the predefined distance and
- forms a stop for the bolt (11) of the other displacement guide (2) so that both displacement guides (2) are displaceable together at the predefined distance with respect to one another along the longitudinal direction (L) of the support shaft (1).

12. Conveyor belt stripping device according to one of Claims 1 to 5, 7 and 8, **characterized in that** the connection device (7) has a hollow cylinder (13) on each of the two displacement guides (2) and a piston (14) arranged therein,
**in that** the piston (14) of the one displacement guide (2) is movable relative to the hollow cylinder (13) of the one displacement guide (2),
the piston (14) of the one displacement guide (2) is coupled with the hollow cylinder (13) of the other displacement guide (2) in such a manner that
- the one displacement guide (2) is slidable away from the other displacement guide (2) along the longitudinal direction (L) of the support shaft (1) until a stop (15) of the piston (14) of the one displacement guide (2) abuts against a delimiter (16) of the hollow cylinder (13) of the one displacement guide (2) and
- both displacement guides (2) are displaceable together at the predefined distance with respect to one another along the longitudinal direction (L) of the support shaft (1), whilst the stop (15) of the piston (14) of the one displacement guide (2) abuts against the delimiter (16) of the hollow cylinder (13) of the one displacement guide (2).

13. Conveyor belt stripping device according to Claim 12, **characterized in that** each hollow cylinder (13) extends over the entire length, running in the longitudinal direction (L) of the support shaft (1), of one of the longitudinal sides (10A, 10B) of the associated displacement guide (2) and **in that** the extension of each piston (14) is longer in the longitudinal direction (L) of the support shaft (1) than the predefined distance.

14. Conveyor belt stripping device according to one of Claims 1 to 4 and 7, **characterized in that** the connection device (7) for the two displacement guides (2) comprises two connection plates (17A, 17B) which are connected together in an articulated manner,
**in that** the one connection plate (17A) is fixed rotatably to the one displacement guide (2) and the other connection plate (17B) is fixed rotatably to the other displacement guide (2).

## Revendications

1. Dispositif de raclage de bande transporteuse pour une bande transporteuse d'une installation de bande transporteuse,
avec un arbre porteur (1) et au moins deux guides de déplacement (2) disposés l'un à côté de l'autre sur l'arbre porteur (1) en transmettant le couple par complémentarité de formes, chacun des deux guides de déplacement (2)
- après avoir desserré un dispositif de fixation (3) du dispositif de raclage de la bande transporteuse, peut être déplacé dans la direction longitudinale (L) de l'arbre porteur (1) et
- est relié à une extrémité de retenue (5) d'un segment racleur (4) du dispositif de raclage de bande transporteuse, le segment racleur (4) présentant une extrémité de raclage (6) espacée de l'extrémité de retenue (5) et pouvant être amenée en appui sur la bande transporteuse,
**caractérisé en ce que**
**en ce que** les deux guides de déplacement (2) peuvent être couplés efficacement l'un à l'autre dans la direction longitudinale (L) de l'arbre porteur (1) au moyen de un dispositif de liaison (7) du dispositif de raclage de bande transporteuse,
**en ce que** l'un des deux guides de déplacement (2) peut être déplacé, dans l'état d'accouplement avec l'autre guide de déplacement (2), à une distance prédéfinie de l'autre guide de déplacement (2) le long de la direction longitudinale (L) de l'arbre porteur (1) et peut ensuite être déplacé à la distance prédéfinie de l'autre guide de déplacement (2) conjointement avec l'autre guide de déplacement (2) le long de la direction longitudinale (L) de l'arbre porteur (1) en raison de l'accouplement au moyen du dispositif de liaison (7).

2. Dispositif de raclage de bande transporteuse selon la revendication 1, **caractérisé en ce que** , **en ce que** l'un des deux guides de déplacement (2), dans l'état d'accouplement avec l'autre guide de déplacement (2), peut être déplacé au moyen du dispositif de liaison (7) à la distance prédéfinie de l'autre guide de déplacement (2) le long de la direction longitudinale (L) de l'arbre de support (1) et peut ensuite être déplacé au moyen du dispositif de liaison (7) à la distance prédéfinie de l'autre guide de déplacement (2) conjointement avec l'autre guide de déplacement (2) le long de la direction longitudinale (L) de l'arbre de support (1) en raison de l'accouplement au moyen du dispositif de liaison (7).

3. Dispositif de raclage de bande transporteuse selon la revendication 1 ou 2, **caractérisé en ce que** , **en ce que** l'un des deux guides de déplacement (2) peut être déplacé à l'état d'accouplement avec l'autre guide de déplacement (2) en exerçant une force de traction sur le premier guide de déplacement (2) à la distance prédéfinie de l'autre guide de déplacement (2) le long de la direction longitudinale (L) de l'arbre de support (1) et peut ensuite être déplacé en exerçant une force de traction sur le deuxième guide de déplacement (2). sur l'un des guides de déplacement (2) au moyen du dispositif de liaison (7) à la distance prédéfinie de l'autre guide de déplacement (2) conjointement avec l'autre guide de déplacement (2) le long de la direction longitudinale (L) de l'arbre porteur (1) dans le sens de la force de traction en raison de l'accouplement au moyen du dispositif de liaison (7).

4. Dispositif de raclage de bande transporteuse selon l'une des revendications précédentes, **caractérisé en ce que** le dispositif de liaison (7) est fixé sur les deux guides de déplacement (2), de préférence au moyen d'un élément de fixation (8) du dispositif de liaison (7).

5. Dispositif de raclage de bande transporteuse selon l'une des revendications précédentes, **caractérisé en ce que** le dispositif de liaison (7) comporte un élément de liaison (9) qui s'étend d'un guide de déplacement (2) à l'autre guide de déplacement (2).

6. Dispositif de raclage de bande transporteuse selon l'une des revendications précédentes, **caractérisé en ce que** le dispositif de liaison (7) a exactement un élément de liaison (9) qui s'étend sur tous les guides de déplacement (2).

7. Dispositif de raclage de bande transporteuse selon l'une des revendications précédentes, **caractérisé en ce que** chacun des deux guides de déplacement (2) présente des côtés longitudinaux (10A, 10B) qui, à l'état monté sur l'arbre porteur (1), s'étendent le long de la direction longitudinale (L) de l'arbre porteur (1) et **en ce que** le dispositif de liaison (7) est fixé sur au moins un côté longitudinal (10) de chacun des deux guides de déplacement (2).

8. Dispositif de raclage de bande transporteuse selon l'une des revendications précédentes, **caractérisé en ce que** le dispositif de liaison (7) présente deux éléments de liaison (9),
**en ce que** l'un des éléments de liaison (9) s'étend d'un côté longitudinal (10A) de l'un des guides coulissants (2) à un côté longitudinal (10A) de l'autre guide coulissant (2) et
**en ce que** l'autre élément de liaison (9) s'étend de l'autre côté longitudinal (10B) de l'un des guides de déplacement (2) à l'autre côté longitudinal (10B) de l'autre guide de déplacement (2).

9. Dispositif de raclage de bande transporteuse selon les revendications 4 et 5 et, en option, l'une des revendications 6, 7 et 8, **caractérisé en ce que** l'élément de liaison (9) ou les deux éléments de liaison (9) est/sont chacun une chaîne ou un câble et la longueur de la chaîne ou du câble entre les éléments de fixation (8) des deux guides de déplacement (2) est supérieure à la distance entre les éléments de fixation (8) des deux guides de déplacement (2) lorsque les deux guides de déplacement (2) sont en contact l'un avec l'autre.

10. Dispositif de raclage de bande transporteuse selon la revendication 5 et, en option, l'une quelconque des revendications 7 à 8, **caractérisé en ce que** l'élément de liaison (9) ou les deux éléments de liaison (9) est/sont chacun une bande élastique.

11. Dispositif de raclage de bande transporteuse selon l'une quelconque des revendications 1 à 5, 7 et 8, **caractérisé en ce que** le dispositif de liaison (7) comporte, sur chacun des deux guides de déplacement (2), un boulon (11) et un élément de liaison (9) qui s'étend d'un guide de déplacement (2) à l'autre guide de déplacement (2) lorsque les deux guides de déplacement sont en contact l'un avec l'autre,
que chaque élément de liaison (9) présente un évidement (12),
**en ce que** l'évidement (12) de l'élément de liaison (9) de l'un des guides coulissants (2), à l'état d'accouplement avec l'autre guide coulissant (2)
- reçoit le boulon (11) de l'autre guide de déplacement (2) de telle sorte que le boulon (11) de l'autre guide de déplacement (2) peut être déplacé dans l'évidement (12) de l'élément de liaison (9) de l'un des guides de déplacement (2) le long de la direction longitudinale (L) de l'arbre porteur (1) sur la distance prédéfinie et
- forme une butée pour le boulon (11) de l'autre guide de déplacement (2), de sorte que les deux guides de déplacement (2) peuvent être déplacés ensemble à la distance prédéfinie l'un de l'autre le long de la direction longitudinale (L) de l'arbre porteur (1).

12. Dispositif de raclage de bande transporteuse selon l'une quelconque des revendications 1 à 5, 7 et 8, **caractérisé en ce que** le dispositif de liaison (7) comporte un cylindre creux (13) sur chacun des deux guides de déplacement (2) et un piston (14) disposé dans celui-ci,
**en ce que** le piston (14) de l'un des guides de déplacement (2) est mobile par rapport au cylindre creux (13) de l'un des guides de déplacement (2),
le piston (14) de l'un des guides de déplacement (2) est couplé au cylindre creux (13) de l'autre guide de déplacement (2) de telle sorte que
- l'un des guides de déplacement (2) peut être éloigné de l'autre guide de déplacement (2) le long de la direction longitudinale (L) de l'arbre porteur (1) jusqu'à ce qu'une butée (15) du piston (14) de l'un des guides de déplacement (2) s'applique contre un limiteur (16) du cylindre creux (13) de l'un des guides de déplacement (2) et
- les deux guides de déplacement (2) peuvent être déplacés ensemble à la distance prédéfinie l'un de l'autre le long de la direction longitudinale (L) de l'arbre porteur (1), tandis que la butée (15) du piston (14) de l'un des guides de déplacement (2) s'applique contre le limiteur (16) du cylindre creux (13) de l'un des guides de déplacement (2).

13. Dispositif de raclage de bande transporteuse selon la revendication 12, **caractérisé en ce que** chaque cylindre creux (13) s'étend sur toute la longueur, s'étendant dans la direction longitudinale (L) de l'arbre de support (1), de l'un des côtés longitudinaux (10A, 10B) du guide de déplacement associé (2) et **en ce que** l'extension de chaque piston (14) dans la direction longitudinale (L) de l'arbre de support (1) est plus longue que la distance prédéfinie.

14. Dispositif de raclage de bande transporteuse selon l'une des revendications 1 à 4 et 7, **caractérisé en ce que** le dispositif de liaison (7) pour les deux guides de déplacement (2) comporte deux plaques de liaison (17A, 17B) reliées entre elles de manière articulée,
**en ce que** l'une des plaques de liaison (17A) est fixée de manière rotative sur l'un des guides de déplacement (2) et l'autre plaque de liaison (17B) est fixée de manière rotative sur l'autre guide de déplacement (2).
